# EUROPEAN PATENT APPLICATION

(11) **EP 4 373 161 A1**
(43) Date of publication of application: **22.05.2024**
(21) Application number: 22841767.1
(22) Date of filing: 27.04.2022
(51) Int. Cl.: H04W 36/28, H04W 16/32, H04W 72/04, H04W 92/20

(54) **WIRELESS ACCESS NETWORK NODES AND METHOD FOR SAME**

(30) Priority: 14.07.2021 JP 2021116603
(71) Applicant: NEC Corporation, 108-8001 Tokyo (JP)
(72) Inventor: FUTAKI Hisashi, Tokyo 108-8001 (JP); HAYASHI Sadafuku, Tokyo 108-8001 (JP)
(74) Representative: MacDougall, Alan John Shaw
(86) International application number: PCT/JP2022/019162
(87) International publication number: WO 2023/286420

(57) **Abstract**

A target Secondary Node (T-SN) (4) indicates to a Master Node (MN) (1), in a response message to a request for an inter-SN Conditional PSCell Change (CPC), whether or not all of candidate PSCells suggested by the MN (1) or a source SN (S-SN) (2) have been accepted. If all of these candidate PSCells have been accepted, the MN (1) sends an MN RRC reconfiguration message to a UE (3) to instruct the inter-SN CPC while skipping additional signaling with the S-SN (2) or without waiting for the completion of the additional signaling. Otherwise, the MN (1) sends an MN RRC reconfiguration message to the UE (3) after additional signaling with the S-SN (2). Otherwise, the MN (1) sends an MN RRC reconfiguration message to the UE (3) after additional signaling with the S-SN (2). This prevents, for example, increased delays in the preparation of an SN-initiated inter-SN CPC.

## Description

### Technical Field

The present disclosure relates to radio communication systems, and in particular to mobility of a radio terminal in multi-connectivity (e.g., Dual Connectivity).

### Background Art

The 3rd Generation Partnership Project (3GPP (registered trademark)) is working on Release 17. The 3GPP is discussing the application of conditional mobility to a cell change (i.e., inter-SN PSCell change) between Secondary Nodes (SNs) of a Primary Secondary Cell Group (SCG) Cell (PSCell) in an SCG of Dual Connectivity (DC) (see, for example, Non-Patent 1-7). This is called an inter-SN conditional PSCell Change (CPC). An PSCell is the Special Cell (SpCell) of an SCG in DC. The UE performs random access to the PSCell when it performs a handover procedure (or Reconfiguration with Sync procedure). An SCG is a group of serving cells associated with an SN, consisting of the SpCell (i.e., PSCell) and optionally one or more Secondary Cells (SCells).

CPC is a PSCell change procedure that is executed only when one or more execution conditions are met or satisfied. The radio terminal (i.e., User Equipment (UE)) maintains the connection to the Source SN (S-SN) and the SCG after receiving a PSCell change instruction from the Master Node (MN) and starts to evaluate an execution condition(s) configured by the instruction. The UE then initiates access to the Target SN (T-SN) in response to the satisfaction of the execution condition(s). In other words, CPC differs from normal PSCell change in that the UE initiates access to the target PSCell (or new PSCell) not in response to a PSCell change instruction, but in response to the satisfaction of the execution condition(s) configured by the instruction.

Inter-SN CPC can be initiated by the MN or by the Source SN. Inter-SN CPC initiated by the MN is called MN initiated inter-SN CPC. On the other hand, inter-SN CPC initiated by the S-SN is called SN initiated inter-SN CPC. In MN initiated inter-SN CPC, the MN generates a CPC execution condition(s) and the T-SN generates the PSCell configuration (or SCG configuration). In contrast, for SN initiated inter-SN CPC, the S-SN generates a CPC execution condition(s) and sends it to the MN. For both MN-initiated CPC and SN-initiated CPC, the T-SN generates the SCG configuration and sends it to the MN. The MN then sends the CPC configuration (e.g., ConditionalReconfiguration Information Element (IE)), containing the CPC execution conditions and the SCG configuration, to the UE via a Radio Resource Control (RRC) (Connection) Reconfiguration message.

### Citation List

### Non Patent Literature

[Non-Patent Literature 1] Vice Chairman (Nokia), "Report on LTE legacy, Mobility, DCCA, Multi-SIM and RAN slicing", R2-2106471, 3GPP TSG-RAN WG2 Meeting #114-e, May 19-27, 2021
[Non-Patent Literature 2] CATT, "TS 37.340 CR for CPA and inter-SN CPC", R2-2105062, 3GPP TSG-RAN WG2 Meeting #114-e, May 19-27, 2021
[Non-Patent Literature 3] Huawei, "(TP to CPAC TS 37.340 BL CR) Consideration on conditional PSCell change/addition", R3-212833, 3GPP TSG-RAN WG3 Meeting #112-e, May 17-28, 2021
[Non-Patent Literature 4] Samsung, "(TP to TS 38.423, LTE_NR_DC_enh2-Core) Adding CPAC Procedure", R3-212968, 3GPP TSG-RAN WG3 Meeting #112-e, May 17-27, 2021
[Non-Patent Literature 5] Samsung, "(TP to TS 36.423, LTE_NR_DC_enh2-Core) Adding CPAC Procedure", R3-212969, 3GPP TSG-RAN WG3 Meeting #112-e, May 17-27, 2021
[Non-Patent Literature 6] Huawei, "Support of Conditional PSCell Change and Addition", R3-212995, 3GPP TSG-RAN WG3 Meeting #112-e, May 17-27, 2021
[Non-Patent Literature 7] Nokia, Nokia Shanghai Bell, "CPAC BL CR to TS 36.423", R3-212994, 3GPP TSG-RAN WG3 Meeting #112-e, May 17-28, 2021

### Summary of Invention

### Technical Problem

The inventors have studied inter-SN CPC and found various problems. One of these problems relates to the details of the SN-initiated inter-SN CPC procedure. As mentioned above, in SN-initiated inter-SN CPC, the MN generates a CPC configuration (e.g., ConditionalReconfiguration IE) containing a CPC execution condition(s) received from the S-SN and a PSCell configuration (or SCG configuration) received from the T-SN, and sends it to the UE via an RRC (Connection) Reconfiguration message. In an example, the MN may receive a CPC execution condition(s) for each of a plurality of candidate PSCells from the S-SN in a SN Change Required message, and then receive a PSCell configuration for each of all or a subset of these plurality of candidate PSCells from the T-SN in a SN Addition Request Acknowledge message. However, if the T-SN rejects some of the plurality of candidate PSCells specified by the S-SN, the MN may need to perform additional signaling with the S-SN to obtain updated one or more CPC execution conditions for only a subset of the candidate PSCells accepted by the T-SN. Additionally, in some implementations, the MN may not be able to determine whether the one or more PSCell configurations received from the T-SN match all of the candidate PSCells specified by the S-SN. In this case, the MN may need to perform additional signaling with the S-SN to obtain updated one or more CPC execution conditions, regardless of whether the T-SN has rejected some of the multiple candidate PSCells specified by the S-SN. Such additional signaling may increase the delay in CPC preparation.

Another problem identified by the inventors relates to the details of the SN-initiated inter-SN CPC procedure and the details of the MN-initiated inter-SN CPC procedure. It has been proposed that the MN sends a Conditional PSCell Change Notification message to the S-SN. However, the current 3GPP discussion does not clarify when the MN sends the Conditional PSCell Change Notification message to the S-SN.

One of the objects to be accomplished by example embodiments disclosed herein is to provide apparatuses, methods, and programs that contribute to solving at least one of a plurality of problems, including the problems described above. It should be noted that this object is merely one of the objects to be achieved by the example embodiments disclosed herein. Other objects or problems and novel features will be made apparent from the following description and the accompanying drawings.

### Solution to Problem

A first aspect is directed to a RAN node configured to operate as an MN associated with a Master Cell Group (MCG) in dual connectivity for a UE. The RAN node includes at least one memory and at least one processor coupled to the at least one memory. The at least one processor is configured to receive from an S-SN a first inter-node message indicating a request for an SN-initiated inter-SN CPC. The first inter-node message includes one or more CPC execution condition information items indicating a plurality of CPC execution conditions each associated with a respective one of a plurality of candidate PSCells. The at least one processor is configured to send a second inter-node message to a T-SN indicating a request for an inter-SN CPC and including information about the plurality of candidate PSCells, and to receive a third inter-node message from the T-SN. The third inter-node message includes one or more PSCell configuration information items each indicating a PSCell configuration of a respective one of one or more accepted candidate PSCells. The third inter-node message indicates to the MN whether all of the plurality of candidate PSCells have been accepted or not. The at least one processor is configured to, if the third inter-node message indicates that all of the plurality of candidate PSCells have been accepted, transmit to the UE a first MN RRC reconfiguration message including the one or more CPC execution condition information items and the one or more PSCell configuration information items, while skipping additional signaling with the source SN or without waiting for completion of the additional signaling. On the other hand, the at least one processor is configured to, if the third inter-node message indicates that only a subset of the plurality of candidate PSCells has been accepted, perform the additional signaling with the source SN to obtain one or more updated CPC execution condition information items, and transmit to the UE a first MN RRC reconfiguration message including the one or more updated CPC execution condition information items and the one or more PSCell configuration information items.

A second aspect is directed to a method performed by a RAN node configured to operate as an MN associated with an MCG in dual connectivity for a UE. The method includes the following steps:
(a) receiving from an S-SN a first inter-node message indicating a request for an SN-initiated inter-SN CPC, wherein the first inter-node message includes one or more CPC execution condition information items indicating a plurality of CPC execution conditions each associated with a respective one of a plurality of candidate PSCells;
(b) sending a second inter-node message to a T-SN indicating a request for an inter-SN CPC and including information about the plurality of candidate PSCells;
(c) receiving a third inter-node message from the T-SN, wherein the third inter-node message includes one or more PSCell configuration information items each indicating a PSCell configuration of a respective one of one or more accepted candidate PSCells, and the third inter-node message indicates to the MN whether all of the plurality of candidate PSCells have been accepted or not;
(d) if the third inter-node message indicates that all of the plurality of candidate PSCells have been accepted, transmitting to the UE a first MN RRC reconfiguration message including the one or more CPC execution condition information items and the one or more PSCell configuration information items, while skipping additional signaling with the source SN or without waiting for completion of the additional signaling; and
(e) if the third inter-node message indicates that only a subset of the plurality of candidate PSCells has been accepted, performing the additional signaling with the source SN to obtain one or more updated CPC execution condition information items, and transmitting to the UE a first MN RRC reconfiguration message including the one or more updated CPC execution condition information items and the one or more PSCell configuration information items.

A third aspect is directed to a RAN node configured to operate as a T-SN associated with an SCG in dual connectivity for a UE. The RAN node includes at least one memory and at least one processor coupled to the at least one memory. The at least one processor is configured to receive a second inter-node message from an MN indicating a request for an inter-SN CPC and including information about a plurality of candidate PSCells, and to send a third inter-node message to the MN. The third inter-node message includes one or more PSCell configuration information items each indicating a PSCell configuration of a respective one of one or more accepted candidate PSCells. The third inter-node message indicates to the MN whether all of the plurality of candidate PSCells have been accepted or not.

A fourth aspect is directed to a method performed by a RAN node configured to operate as a T-SN associated with an SCG in dual connectivity for a UE. The method includes: receiving a second inter-node message from an MN indicating a request for an inter-SN CPC and including information about a plurality of candidate PSCells; and sending a third inter-node message to the MN. The third inter-node message includes one or more PSCell configuration information items each indicating a PSCell configuration of a respective one of one or more accepted candidate PSCells. The third inter-node message indicates to the MN whether all of the plurality of candidate PSCells have been accepted or not.

A fifth aspect is directed to a RAN node configured to operate as an MN associated with an MCG in dual connectivity for a UE. The RAN node includes at least one memory and at least one processor coupled to the at least one memory. The at least one processor is configured to receive from an S-SN a first inter-node message indicating a request for an SN-initiated inter-SN CPC. The first inter-node message includes a plurality of cell identification information items each indicating a respective one of a plurality of candidate PSCells, and also includes a plurality of CPC execution condition information items each associated with a respective one of the plurality of cell identification information items. The at least one processor is configured to send to a T-SN a second inter-node message indicating a request for an inter-SN CPC and including information about the plurality of candidate PSCells, and receive from the target SN a third inter-node message including one or more PSCell configuration information items each indicating a PSCell configuration of a respective one of one or more accepted candidate PSCells. The at least one processor is configured to select one or more CPC execution condition information items corresponding to the one or more accepted candidate PSCells from the plurality of CPC execution condition information items. The at least one processor is configured to transmit to the UE a first MN RRC reconfiguration message including the one or more selected CPC execution condition information items and the one or more PSCell configuration information items.

A sixth aspect is directed to a method performed by a RAN node configured to operate as an MN associated with an MCG in dual connectivity for a UE. The method includes the following steps:
(a) receiving from an S-SN a first inter-node message indicating a request for an SN-initiated inter-SN CPC, wherein the first inter-node message includes a plurality of cell identification information items each indicating a respective one of a plurality of candidate PSCells, and also includes a plurality of CPC execution condition information items each associated with a respective one of the plurality of cell identification information items;
(b) sending to a T-SN a second inter-node message indicating a request for an inter-SN CPC and including information about the plurality of candidate PSCells;
(c) receiving from the target SN a third inter-node message including one or more PSCell configuration information items each indicating a PSCell configuration of a respective one of one or more accepted candidate PSCells;
(d) selecting one or more CPC execution condition information items corresponding to the one or more accepted candidate PSCells from the plurality of CPC execution condition information items; and
(e) transmitting to the UE a first MN RRC reconfiguration message including the one or more selected CPC execution condition information items and the one or more PSCell configuration information items.

A seventh aspect is directed to a RAN node configured to operate as an S-SN associated with an SCG in dual connectivity for a UE. The RAN node includes at least one memory and at least one processor coupled to the at least one memory. The at least one processor is configured to send to an MN a first inter-node message indicating a request for an SN-initiated inter-SN CPC. The first inter-node message includes a plurality of cell identification information items each indicating a respective one of a plurality of candidate PSCells, and also includes a plurality of CPC execution condition information items each associated with a respective one of the plurality of cell identification information items.

An eighth aspect is directed to a method performed by a RAN node configured to operate as an MN associated with an MCG in dual connectivity for a UE. The method includes sending to an MN a first inter-node message indicating a request for an SN-initiated inter-SN CPC. The first inter-node message includes a plurality of cell identification information items each indicating a respective one of a plurality of candidate PSCells, and also includes a plurality of CPC execution condition information items each associated with a respective one of the plurality of cell identification information items.

A ninth aspect is directed to a RAN node configured to operate as an MN associated with an MCG in dual connectivity for a UE. The RAN node includes at least one memory and at least one processor coupled to the at least one memory. The at least one processor is configured to transmit an MN RRC reconfiguration message to the UE including an execution condition for an inter-SN CPC and a configuration of a candidate PSCell, and to receive from the UE a first MN RRC reconfiguration complete message sent in response to the MN RRC reconfiguration message. The at least one processor is configured to receive a second MN RRC reconfiguration complete message sent by the UE in response to execution of the CPC or satisfaction of the execution condition. The at least one processor is configured to send a Conditional PSCell Change Notification message to an S-SN in response to receiving the second MN RRC reconfiguration complete message.

A tenth aspect is directed to a method performed by a RAN node configured to operate as an MN associated with an MCG in dual connectivity for a UE. The method includes the following steps:
(a) transmitting an MN RRC reconfiguration message to the UE including an execution condition for an inter-SN CPC and a configuration of a candidate PSCell;
(b) receiving from the UE a first MN RRC reconfiguration complete message sent in response to the MN RRC reconfiguration message;
(c) receiving a second MN RRC reconfiguration complete message sent by the UE in response to execution of the CPC or satisfaction of the execution condition; and
(d) sending a Conditional PSCell Change Notification message to an S-SN in response to receiving the second MN RRC reconfiguration complete message.

An eleventh aspect is directed to a program. The program includes a set of instructions (software codes) that, when loaded into a computer, cause the computer to perform the method according to the second, fourth, sixth, eighth, or tenth aspect described above.

### Advantageous Effects of Invention

According to the aspects described above, it is possible to provide apparatuses, methods and programs that contribute to solving at least one of a plurality of problems related to inter-SN CPC, including the problems described above.

### Brief Description of Drawings

Fig. 1 shows an example configuration of a radio communication network according to an example embodiment;
Fig. 2 shows an example configuration of a RAN node according to an example embodiment;
Fig. 3 is a flowchart showing an example of a process performed by an MN according to an example embodiment;
Fig. 4 is a flowchart showing an example of a process performed by a T-SN according to an example embodiment;
Fig. 5 is a sequence diagram showing an example of a process performed by an MN, S-SN, T-SN, and UE according to an example embodiment;
Fig. 6 is a sequence diagram showing an example of a process performed by an MN, S-SN, T-SN, and UE according to an example embodiment;
Fig. 7 is a flowchart showing an example of a process performed by an MN according to an example embodiment;
Fig. 8 is a flowchart showing an example of a process performed by an S-SN according to an example embodiment;
Fig. 9 is a sequence diagram showing an example of a process performed by an MN, S-SN, T-SN, and UE according to an example embodiment;
Fig. 10 shows an example of the format of a cell identification information item and execution condition information item according to an embodiment;
Fig. 11 shows an example of the format of a cell identification information item and execution condition information item according to an embodiment;
Fig. 12 is a flowchart showing an example of a process performed by an MN according to an example embodiment;
Fig. 13 is a sequence diagram showing an example of a process performed by an MN, S-SN, T-SN, and UE according to an example embodiment;
Fig. 14 is a sequence diagram showing an example of a process performed by an MN, S-SN, T-SN, and UE according to an example embodiment;
Fig. 15 is a block diagram showing an example configuration of a RAN node according to an example embodiment; and
Fig. 16 is a block diagram showing an example configuration of a UE according to an example embodiment.

### Example Embodiment

Specific example embodiments will be described hereinafter in detail with reference to the drawings. The same or corresponding elements are denoted by the same symbols throughout the drawings, and duplicated explanations are omitted as necessary for the sake of clarity.

Each of the example embodiments described below may be used individually, or two or more of the example embodiments may be appropriately combined with one another. These example embodiments include novel features different from each other. Accordingly, these example embodiments contribute to attaining objects or solving problems different from one another and contribute to obtaining advantages different from one another.

The example embodiments presented below are primarily described for the 3GPP Long Term Evolution (LTE) system and the 5th generation mobile communication system (5G system). However, these example embodiments can be applied to other radio communication systems that support technologies similar to 3GPP multi-connectivity (e.g., Dual Connectivity). The term LTE as used in this specification includes enhancements and developments of LTE and LTE-Advanced to enable interworking with the 5G system, unless otherwise noted.

As used in this specification, "if" can be interpreted to mean "when", "at or around the time", "after", "upon", "in response to determining", "in accordance with a determination", or "in response to detecting", depending on the context.

### First Example Embodiment

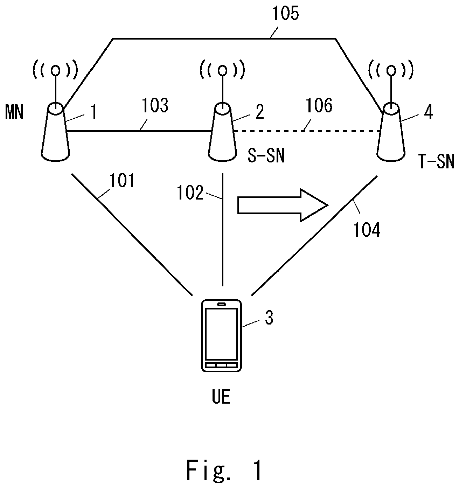

Fig. 1 shows an example configuration of a radio communication network according to a plurality of example embodiments including this example embodiment. In the example of Fig. 1, the radio communication network includes a RAN node 1, a RAN node 2, a RAN node 4, and a UE 3. Each element (or network function) shown in Fig. 1 can be implemented, for example, as a network element on dedicated hardware, as a software instance running on dedicated hardware, or as a virtualized function instantiated on an application platform.

The RAN node 1 may be a Central Unit (e.g., eNB-CU or gNB-CU) in a Cloud RAN (C-RAN) deployment, or a combination of a CU and one or more Distributed Units (e.g., eNB-DUs or gNB-DUs). The C-RAN is also referred to as a CU/DU split. The CU may include a Control Plane (CP) Unit (e.g., gNB-CU-CP) and one or more User Plane (UP) Units (e.g., gNB-CU-UPs). Accordingly, the RAN node 1 may be a CU-CP or a combination of a CU-CP and a CU-UP(s). Similarly, each of the RAN nodes 2 and 4 may be a CU or a combination of a CU and one or more DUs. Each of the RAN nodes 2 and 4 may be a CU-CP or a combination of a CU-CP and a CU-UP(s).

Each of the RAN nodes 1, 2, and 4 may be an Evolved Universal Mobile Telecommunications System (UMTS) Terrestrial Radio Access Network (EUTRAN) node or a Next Generation Radio Access Network (NG-RAN) node. The EUTRAN node may be an eNB or an en-gNB. The NG-RAN node may be a gNB or an ng-eNB. The en-gNB is a node that provides NR user plane and control plane protocol terminations towards a UE and acts as a Secondary Node (SN) in E-UTRA-NR Dual Connectivity (EN-DC). The ng-eNB is a node that provides E-UTRA user plane and control plane protocol terminations towards a UE and is connected to a 5GC via an NG interface. The Radio Access Technology (RAT) of the RAN node 1 may be different from that of the RAN nodes 2 and 4.

The RAN node 1 and the RAN node 2 communicate with each other via an inter-node interface (i.e., X2 interface or Xn interface) 103. The RAN node 1 and the RAN node 2 operate as a Master Node (MN) and a Secondary Node (SN), respectively, in dual connectivity. In addition, the RAN node 1 and the RAN node 4 communicate with each other via an inter-node interface (i.e., X2 interface or Xn interface) 105. The RAN node 1 and the RAN node 4 can operate as an MN and an SN, respectively, in DC. The RAN nodes 1, 2, and 4 support an inter-SN CPC from an SCG provided by the RAN node 2 to an SCG provided by the RAN node 4. In the following, the RAN node 1 may be referred to as MN 1, the RAN node 2 may be referred to as source SN (S-SN) 2, and the RAN node 4 may be referred to as target SN (T-SN) 4. The UE 3 communicates with the MN 1 and the S-SN 2 via air interfaces 101 and 102, and performs dual connectivity of the MCG provided by the MN 1 and an SCG provided by the S-SN 2. Further, by performing inter-SN CPC, the UE 3 communicates with the MN 1 and the T-SN 4 via the air interfaces 101 and 104 and performs dual connectivity of the MCG provided by the MN 1 and an SCG provided by the T-SN 4.

This dual connectivity may be Multi-Radio Dual Connectivity (MR-DC). The MR-DC includes E-UTRA-NR Dual Connectivity (EN-DC), NG-RAN E-UTRA-NR Dual Connectivity (NGEN-DC), NR-E-UTRA Dual Connectivity (NE-DC), and NR-NR Dual Connectivity (NR-DC). Accordingly, the MN 1 may be one of a Master eNB (in EN-DC), a Master ng-eNB (in NGEN-DC), and a Master gNB (in NR-DC and NE-DC). Similarly, each of the S-SN 2 and the T-SN 4 may be one of an en-gNB (in EN-DC), a Secondary ng-eNB (in NE-DC), and a Secondary gNB (in NR-DC and NGEN-DC). In EN-DC, the UE 3 is connected to an eNB acting as the MN 1 and to an en-gNB acting as the S-SN 2 or T-SN 4. In NGEN-DC, the UE 3 is connected to an ng-eNB acting as the MN 1 and to a gNB acting as the S-SN 2 or T-SN 4. In NE-DC, the UE 3 is connected to a gNB acting as the MN 1 and to an ng-eNB acting as the S-SN 2 or T-SN 4. In NR-DC, the UE 3 is connected to one gNB (or gNB-DU) acting as the MN 1 and to another gNB (or gNB-DU) acting as the S-SN 2 or T-SN 4.

The MCG is a group of serving cells associated with (or provided by) the MN 1, including the SpCell (i.e., Primary Cell (PCell)) and optionally one or more Secondary Cells (SCells). Meanwhile, the SCG is a group of serving cells associated with (or provided by) the S-SN 2 or T-SN 4 and includes the Primary SCG Cell (PSCell) and optionally one or more Secondary Cells (SCells). The PSCell is the Special Cell (SpCell) of the SCG and supports Physical Uplink Control Channel (PUCCH) transmission and contention-based random access. In LTE (e.g., LTE-DC and NE-DC), PSCell may be an abbreviation of Primary SCell.

As used in the present specification, the term "primary SCG cell" and its abbreviation "PSCell" stands for a cell that is included in a cell group provided by an SN in dual connectivity, has an uplink component carrier, and is configured with uplink control channel (e.g., PUCCH) resources. Specifically, the term "primary SCG cell" and its abbreviation "PSCell" may refer to a Primary SCG Cell of a cell group provided by an SN (e.g., en-gNB in EN-DC, gNB in NGEN-DC, or gNB in NR-DC) supporting 5G NR, or may refer to a Primary SCell of a cell group provided by an SN (e.g., eNB in LTE DC, or ng-eNB in NE-DC) supporting E-UTRA.

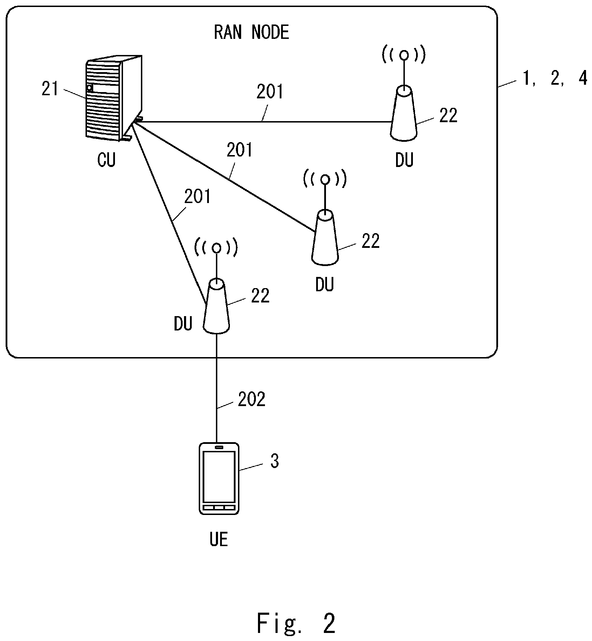

One or more of the MN 1, S-SN 2, and T-SN 4 may have the configuration shown in Fig. 2. Each element (network function) shown in Fig. 2 can be implemented, for example, as a network element on dedicated hardware, as a software instance running on dedicated hardware, or as a virtualized function instantiated on an application platform. One or more of the MN 1, S-SN 2, and T-SN 4 may include, but are not limited to, a CU 21 and one or more DUs 22 as shown in Fig. 2. The CU 21 is connected to each DU 22 via an interface 201. The UE 3 is connected to at least one DU 22 via at least one air interface 202.

The CU 21 may be a logical node that hosts Radio Resource Control (RRC), Service Data Adaptation Protocol (SDAP), and Packet Data Convergence Protocol (PDCP) protocols of the gNB (or hosts the RRC and PDCP protocols of the gNB). The DU 22 may be a logical node that hosts Radio Link Control (RLC), Medium Access Control (MAC), and Physical (PHY) layers of the gNB. If the CU 21 is a gNB-CU and the DUs 22 are gNB-DUs, then the interfaces 201 may be F1 interfaces. The CU 21 may include a CU-CP and a CU-UP(s).

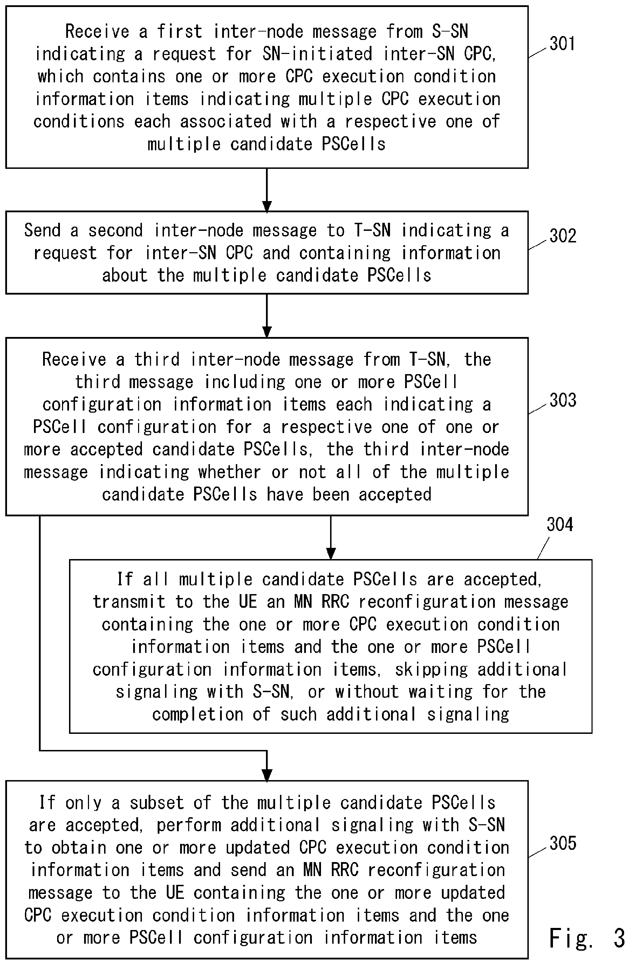

The following describes the operation of the MN 1, S-SN 2, and T-SN 4 in relation to the inter-SN CPC. Fig. 3 shows an example of the operation of the MN 1 with respect to an SN-initiated inter-SN CPC. In step 301, the MN 1 receives a first inter-node message from the S-SN 2 indicating a request for an SN-initiated inter-SN CPC. The first inter-node message may be an SN Change Required message (e.g., SgNB Change Required or S-NODE Change Required). The first inter-node message includes one or more CPC execution condition information items indicating a plurality of CPC execution conditions each associated with a respective one of a plurality of candidate PSCells. In an example, the plurality of CPC execution conditions may be included in a single CPC execution condition information item. In this case, a single CPC execution condition information item indicating the plurality of CPC execution conditions may be sent by the first inter-node message using a container that is transparent to the MN 1. In other words, a single CPC execution condition information item indicating the plurality of CPC execution conditions may be an information item whose contents are unrecognized or unrecognizable by the MN 1. The container transparent to the MN 1 may be an RRC container sent from the S-SN 2 to the UE 3 via the MN 1.

The first inter-node message of step 301 may include one or more information items indicating the candidate PSCells suggested by the S-SN 2. In an example, these one or more information items may be RRC level information items. Specifically, these one or more information items may be included in a candidateCellInfoListSN field in an inter-node RRC message (e.g., CG-Config). The candidateCellInfoListSN field indicates information that identifies the candidate PSCells. The candidateCellInfoListSN field may further indicate measurement results of one or more neighbor cells (candidate PSCells) measured by the UE 3. Additionally or alternatively, these one or more information items may be X2/Xn level information items. Specifically, the first inter-node message (e.g., SN Change Required) may include an information element (IE) indicating a list of candidate PSCells suggested by the S-SN 2.

In step 302, the MN 1 sends a second inter-node message to the T-SN 4 indicating a request for an inter-SN CPC and including information on the plurality of candidate PSCells. The second inter-node message may be an SN Addition Request message (e.g., SgNB Addition Request, or S-NODE Addition Request).

In step 303, the MN 1 receives a third inter-node message from the T-SN 4. The third inter-node message may be a SN Addition Request Acknowledge message (e.g., SgNB Addition Request Acknowledge or S-NODE Addition Request Acknowledge). The third inter-node message includes one or more PSCell configuration information items, each indicating a PSCell configuration for a respective one of the one or more accepted candidate PSCells. Each PSCell configuration may be an SCG configuration. Each PSCell configuration information item may be an SN RRC Reconfiguration message containing the PSCell configuration. In other words, each PSCell configuration information item may be an RRC container containing a single corresponding PSCell configuration. The third inter-node message may contain a list of inter-node RRC messages (e.g., a list of CG-Config) each of which is for a respective one of the candidate PSCells accepted by the T-SN 4. The third inter-node message may contain one or more (<=N) RRC containers carrying inter-node RRC messages as many as the number (N) of candidate PSCells accepted by the T-SN 4.

Further, the third inter-node message of step 303 explicitly or implicitly indicates to the MN 1 whether all of the plurality of candidate PSCells indicated in the second inter-node message have been accepted or not. In other words, the third inter-node message explicitly or implicitly indicates to the MN 1 whether or not all of the plurality of candidate PSCells indicated (or suggested) by the MN 1 or S-SN 2 have been accepted. The third inter-node message may additionally contain X2/Xn level information indicating the candidate PSCells accepted by the T-SN 4.

In one example, this may be indicated at the RRC level. Specifically, the T-SN 4 may explicitly or implicitly indicate in an inter-node RRC message (e.g., CG-Config) whether or not all of the plurality of candidate PSCells have been accepted. For example, the T-SN 4 may include information in the inter-node RRC message (e.g., CG-Config) that explicitly indicates that all of the plurality of candidate PSCells have been accepted (or that some have not been accepted). Alternatively, the inter-node RRC message (e.g., CG-Config) may include a list of identifiers (PSCell IDs) of one or more candidate PSCells that have been rejected (i.e., not accepted) by the T-SN 4. The MN 1 may recognize that the T-SN 4 has accepted all the candidate PSCells by the fact that the list is not included in the message (i.e., it may understand that all the candidate PSCells have been accepted). Additionally or alternatively, the inter-node RRC message (e.g., CG-Config) may include a list of identifiers (PSCell IDs) of one or more candidate PSCells accepted by the T-SN 4. In this case, the S-SN 2 sends the list of candidate PSCells suggested by the S-SN 2 in advance in the first inter-node message in a form that can be understood (or recognized) by the MN 1. The MN 1 may then determine whether or not all the candidate PSCells have been accepted by comparing the list received from the S-SN 2 with the list received from the T-SN 4. The identifier of a candidate PSCell (PSCell ID) may be an NR Cell Global Identifier (NR-CGI) or an Evolved Universal Terrestrial Radio Access Network (E-UTRAN) CGI (ECGI). In this case, the list can indicate to the MN 1 whether or not all of the multiple candidate PSCells specified by the MN 1 or S-SN 2 have been accepted.

In another example, this can be indicated at X2/Xn level. In particular, the T-SN 4 may explicitly or implicitly indicate in an information element (IE) included in the third inter-node message whether or not all of the plurality of candidate PSCells indicated by the MN 1 or S-SN 2 have been accepted. More specifically, for example, the third inter-node message (e.g., SN Addition Request Acknowledge) may include an information element that explicitly indicates that all of the plurality of candidate PSCells have been accepted (or partially not accepted) by the T-SN 4. Alternatively, the third inter-node message may contain a list of identifiers (PSCell IDs) of one or more candidate PSCells that have been rejected (i.e., not accepted) by the T-SN 4. The MN 1 may recognize that the T-SN 4 has accepted all the candidate PSCells by the fact that the list is not included in the message (i.e., it may understand that all the candidate PSCells have been accepted). Additionally or alternatively, the third inter-node message may contain a list of one or more candidate PSCells accepted by the T-SN 4 (e.g., Candidate PSCell ID List IE). This list may associate an identifier (PSCell ID) of each accepted candidate PSCell with a corresponding PSCell configuration (e.g., RRC Container, SN RRC Reconfiguration message). In this case, the S-SN 2 sends in advance a list of candidate PSCells suggested by the S-SN 2 at X2/Xn level in the first inter-node message. The MN 1 may then determine whether or not all the candidate PSCells have been accepted by comparing the list received from the S-SN 2 with the list received from the T-SN 4. The identifier of a candidate PSCell (PSCell ID) may be NR-CGI or ECGI. In this case, the list can indicate to the MN 1 whether or not all of the multiple candidate PSCells specified by the MN 1 or S-SN 2 have been accepted. In particular, the MN 1 can know whether or not all of the multiple candidate PSCells specified (or suggested) by the MN 1 or S-SN 2 have been accepted by checking one or more PSCell IDs included in this list.

In step 304, the MN 1 detects that all of the multiple candidate PSCells have been accepted by the T-SN 4 by checking the third inter-node message. In this case, the MN 1 sends an MN RRC (connection) reconfiguration message to the UE 3 containing the one or more CPC execution condition information items received from the S-SN 2 (step 301) and the one or more PSCell configuration information items received from the T-SN 4 (step 303), while skipping additional signaling with the S-SN 2 or without waiting for such additional signaling to be completed. The MN RRC reconfiguration message instructs the UE 3 to perform a conditional reconfiguration for the CPC. Upon receipt of the MN RRC reconfiguration message, the UE 3 starts to evaluate the CPC execution conditions. The UE 3 then starts accessing the T-SN 4 in response to the CPC execution condition(s) of one of the candidate PSCells being satisfied.

The MN RRC reconfiguration message of step 304 may include a ConditionalReconfiguration IE. The ConditionalReconfiguration IE may contain a condReconfigToAddModList IE. The condReconfigToAddModList IE may associate the PSCell configuration (e.g., SN RRC Reconfiguration message) of each candidate PSCell with the corresponding CPC execution condition. This CPC execution condition may be specified by a measurement identifier (measurement identity (measId)). The measurement identifier associates a measurement object (MeasObject) with a report configuration (ReportConfig). The MeasObject indicates information applicable to intra-frequency or inter-frequency (intra/inter-frequency) measurements and specifies the identifiers of one or more candidate PSCells. The ReportConfig specifies criteria for triggering of a CPC event.

On the other hand, if only a subset of the multiple candidate PSCells is accepted by the T-SN 4, the MN 1 performs step 305 instead of step 304. In step 305, the MN 1 performs additional signaling with the S-SN to obtain one or more updated CPC execution condition information items. For example, the MN 1 sends an inter-node message to the S-SN 2 indicating the identifiers of the candidate PSCells accepted by the T-SN 4, and the S-SN 2 responds by sending an inter-node message to the MN 1 indicating the updated CPC execution condition information item(s) (if necessary). The updated CPC execution condition information item(s) may be those where the CPC execution conditions for candidate PSCells that were not accepted by the T-SN 4 have been removed from the CPC execution condition information item(s) already sent by the S-SN 2 to the MN 1. In addition, at this stage, the S-SN 2 may update the CPC execution conditions for the candidate PSCells accepted by the T-SN 4 and send them to the MN 1 as the updated CPC execution condition information item(s). The MN 1 then sends an MN RRC reconfiguration message to the UE 3 containing the one or more CPC execution condition information items updated by the S-SN 2 and the one or more PSCell configuration information items received from the T-SN 4.

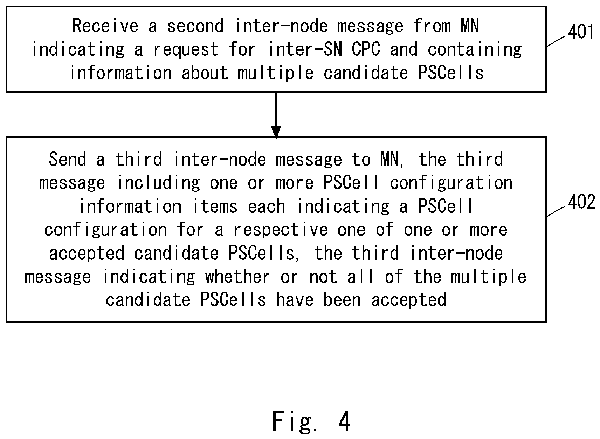

Fig. 4 shows an example of the operation of the T-SN 4. Step 401 corresponds to step 302 in Fig. 3. Specifically, the T-SN 4 receives a second inter-node message from the MN 1 indicating a request for an inter-SN CPC and containing information on a plurality of candidate PSCells. Meanwhile, step 402 corresponds to step 303 in Fig. 3. Specifically, the T-SN 4 sends a third inter-node message to the MN 1. The third inter-node message may be an SN Addition Request Acknowledge message (e.g., SgNB Addition Request Acknowledge or S-NODE Addition Request Acknowledge). The third inter-node message includes one or more PSCell configuration information items, each indicating a PSCell configuration for a respective one of the one or more accepted candidate PSCells. In addition, the third inter-node message explicitly or implicitly indicates to the MN 1 whether or not all of the plurality of candidate PSCells specified in the second inter-node message have been accepted. Specific examples of the third inter-node message are the same as described with respect to step 303 in Fig. 3.

According to the operation described with reference to Figs. 3 and 4, if all of the candidate PSCells suggested by the MN 1 or S-SN 2 have been accepted by the T-SN 4, the MN 1 sends an MN RRC reconfiguration message to instruct the CPC to the UE 3 while skipping additional signaling with the S-SN 2 or without waiting for the completion of such additional signaling. This can avoid the increased delay in CPC preparation caused by additional signaling.

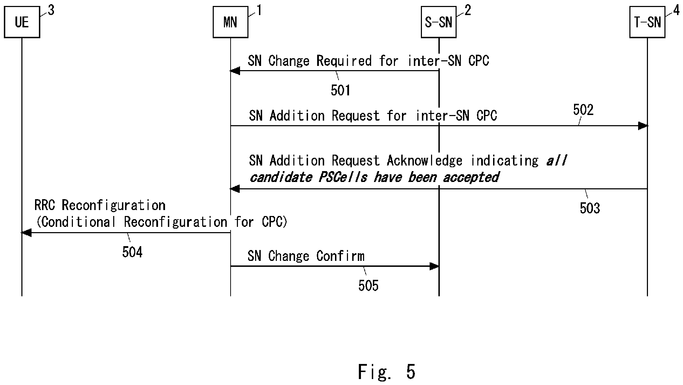

Fig. 5 shows examples of the operation of the MN 1, S-SN 2, T-SN 4, and UE 3. The procedure shown in Fig. 5 is based on the operation of the MN 1 shown in steps 301-304 of Fig. 3 and the operation of the T-SN 4 shown in Fig. 4. In step 501, the S-SN 2 initiates an inter-SN CPC procedure by sending an SN Change Required message (e.g., SgNB Change Required or S-NODE Change Required) to the MN 1. In this message, the S-SN 2 indicates the CPC initiation to the MN 1. This message contains the identifier of the T-SN 4. This message further includes one or more CPC execution condition information items indicating a plurality of CPC execution conditions each associated with a respective one of a plurality of candidate PSCells. The MN 1 may or may not comprehend the CPC execution conditions (i.e., one or more CPC execution condition information items) set by the S-SN 2. The CPC execution conditions may be contained in an RRC container transparent to the MN 1. In other words, the one or more CPC execution condition information items may be an RRC container transparent to the MN 1.

In step 502, the MN 1 requests the T-SN 4 to allocate resources for the UE 3 using an SN Addition procedure. Specifically, the MN 1 sends an SN Addition Request message (e.g., SgNB Addition Request or S-NODE Addition Request) to the T-SN 4. This message indicates the CPC initiation to the T-SN 4 and indicates multiple candidate PSCells to the T-SN 4. In this message, the MN 1 may provide an upper limit (or maximum number) of candidate PSCells to the T-SN 4.

In step 503, the T-SN 4 responds to the MN 1 with an SN Addition Request Acknowledge message (e.g., SgNB Addition Request Acknowledge or S-NODE Addition Request Acknowledge). This message indicates that all of the multiple candidate PSCells suggested by the MN 1 or S-SN 2 have been accepted (or prepared). This message contains one or more PSCell configuration information items, each indicating a PSCell configuration for a respective one of the accepted candidate PSCells. Each PSCell configuration may be an SCG configuration. Each PSCell configuration information item may be an SN RRC Reconfiguration message containing a PSCell configuration. In other words, each PSCell configuration information item may be an RRC container containing a corresponding PSCell configuration.

The MN 1 detects that all candidate PSCells suggested by the MN 1 or S-SN 2 have been accepted by the T-SN 4 by checking the SN Addition Request Acknowledge message. Accordingly, in step 504, the MN 1 sends an MN RRC (connection) reconfiguration message to the UE 3 to instruct the UE 3 to perform a conditional reconfiguration for the CPC. The MN RRC reconfiguration message includes the one or more CPC execution condition information items (step 501) that have been received from the S-SN 2 and the one or more PSCell configuration information items (step 503) received from the T-SN 4. Upon receipt of the MN RRC reconfiguration message, the UE 3 initiates the evaluation of the CPC execution conditions. The UE 3 then initiates access to the T-SN 4 in response to the CPC execution condition(s) of one of the candidate PSCells being satisfied.

In step 505, the MN 1 sends a SN Change Confirm message (e.g., SgNB Change Confirm or S-NODE Change Confirm) to the S-SN 2. This message informs the S-SN 2 that the allocation of the T-SN 4 resources for the inter-SN CPC has been successful. The SN Change Confirm message in step 505 causes the S-SN 2 to continue providing user data to the UE 3 until a future CPC execution. In other words, the S-SN 2 receives the SN Change Confirm message but does not stop providing user data to the UE 3. The SN Change Confirm message may contain information indicating that this message is for an inter-SN CPC.

The order in which the messages shown in Fig. 5 are sent is only an example. For example, the SN Change Confirm message in step 505 may be sent to the S-SN 2 before the MN RRC Reconfiguration message in step 504. In other words, in response to receiving the SN Addition Request Acknowledge message, the MN 1 may send the MN RRC Reconfiguration message to the UE 3, while sending the SN Change Confirm message to the S-SN 2.

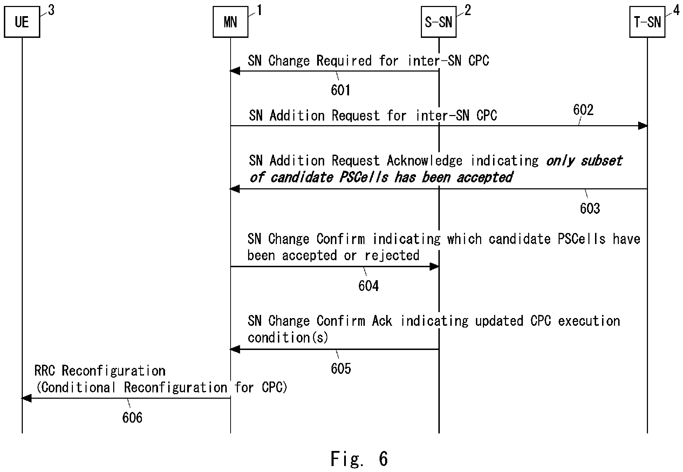

Fig. 6 shows examples of the operation of the MN 1, S-SN 2, T-SN 4, and UE 3. The procedure shown in Fig. 6 is based on the operation of the MN 1 shown in steps 301-303 and 305 of Fig. 3 and the operation of the T-SN 4 shown in Fig. 4. Steps 601 and 602 are similar to steps 501 and 502 of Fig. 5.

In step 603, the T-SN 4 responds to the MN 1 with an SN Addition Request Acknowledge message (e.g., SgNB Addition Request Acknowledge or S-NODE Addition Request Acknowledge). This message indicates that only a subset of the multiple candidate PSCells suggested by the MN 1 or S-SN 2 have been accepted (or prepared). Based on this fact, the MN 1 performs additional signaling with the S-SN 2 to receive one or more updated CPC execution condition information items. This additional signaling includes steps 604 and 605.

Specifically, in step 604, the MN 1 sends an inter-node message to the S-SN 2. This inter-node message may be an SN Change Confirm message (e.g., SgNB Change Confirm or S-NODE Change Confirm) or an SN Modification Request message (e.g., SgNB Modification Request or S-NODE Modification Request). The inter-node message indicates which candidate PSCell(s) have been accepted or rejected by the T-SN 4. In step 605, the S-SN 2 responds to the MN 1 with another inter-node message. The inter-node message of step 605 may be a newly defined Xn/X2 message (e.g., SN Change Confirm Ack). Alternatively, the inter-node message of step 605 may be an SN Modification Request Acknowledge message (e.g., SgNB Modification Request Acknowledge or S-NODE Modification Request Acknowledge). The inter-node message of step 605 includes one or more updated CPC execution condition information items. These one or more updated CPC execution condition information items indicate one or more CPC execution conditions for only the one or more candidate PSCells accepted by the T-SN 4. These one or more updated CPC execution condition information items may be sent by the inter-node message (step 605) using one or more containers (e.g., RRC containers) that are transparent to the MN 1. In other words, a single CPC execution condition information item indicating multiple CPC execution conditions may be an information item whose contents are unrecognized or unrecognizable by the MN 1.

After completion of the additional signaling (i.e., steps 604 and 605), in step 606, the MN 1 sends an MN RRC (connection) reconfiguration message to the UE 3 to instruct the UE 3 to perform a conditional reconfiguration for the CPC. The MN RRC reconfiguration message includes the one or more CPC execution condition information items (step 605) updated by the S-SN 2 and the one or more PSCell configuration information items (step 603) received from the T-SN 4.

### Second Example Embodiment

The example configuration of a radio communication network according to this example embodiment is the same as the examples shown in Fig. 1 and Fig. 2. The following describes the operation of the MN 1, S-SN 2, and T-SN 4 with respect to the inter-SN CPC.

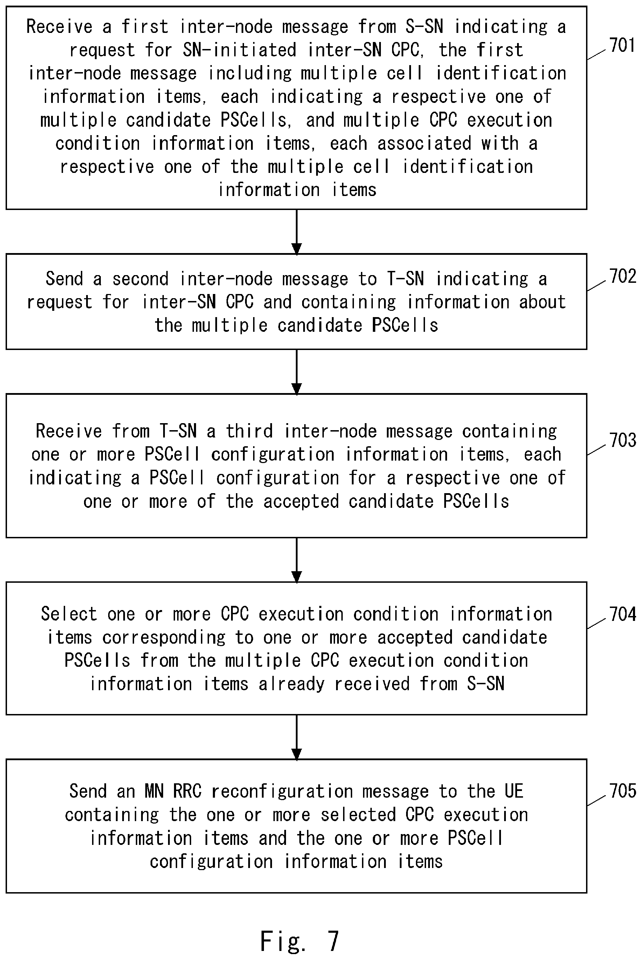

Fig. 7 shows an example of the operation of the MN 1 with respect to the SN-initiated inter-SN CPC. In step 701, the MN 1 receives a first inter-node message from the S-SN 2 indicating a request for an SN-initiated inter-SN CPC. The first inter-node message may be an SN Change Required message (e.g., SgNB Change Required or S-NODE Change Required). The first inter-node message includes a plurality of cell identification information items, each of which indicates a respective one of a plurality of candidate cells (candidate PSCells), and a plurality of CPC execution condition information items, each of which is associated with a respective one of the plurality of cell identification information items. Each CPC execution condition information item indicates a CPC execution condition(s) for a single corresponding candidate PSCell. Each CPC execution condition information item may be sent by the first inter-node message using a container that is transparent to the MN 1. In other words, each CPC execution condition information item may be an information item whose contents are unrecognized or unrecognizable by the MN 1. Each CPC execution condition information item may be an RRC container sent from the S-SN 2 to the UE 3 via the MN 1.

Each cell identification information item is an information item that is non-transparent to (i.e., recognizable by) the MN 1. Each cell identification information item may indicate the identifier of a corresponding one of the multiple candidate PSCells. For example, each cell identification information item may be a Physical Cell ID (PCI) and a carrier frequency (e.g., Absolute Radio Frequency Channel Number (ARFCN)), or CGI-info. On the other hand, each CPC execution condition information item may be an information item that is transparent to the MN 1. Each CPC execution condition information item may contain one or more measurement identifiers (measurement identity (measId)).

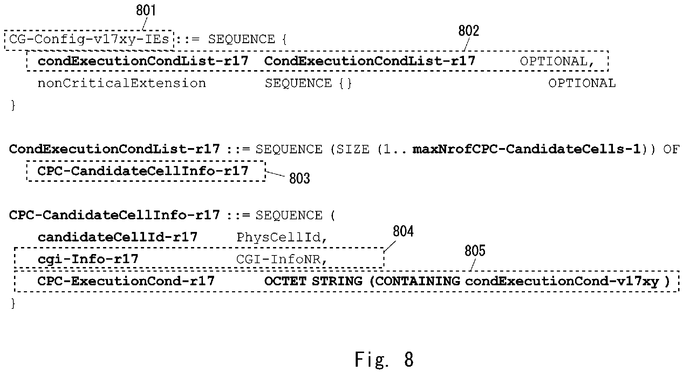

Fig. 8 shows specific examples of a cell identification information item and an execution condition information item. In the example in Fig. 8, the first inter-node message sent from the S-SN 2 to the MN 1 contains a CG-Config message 801. The CG-Config message 801 is an inter-node RRC message. The CG-Config message 801 includes a CondExecutionCondList IE (or field) 802, which is an information element containing a cell identification information item and an execution condition information item. Each entry in the CondExecutionCondList IE802 indicates information about a single candidate PSCell (CPC-CandidateCellInfo (803)). Specifically, each entry in the CondExecutionCondList IE802 contains a cgi-Info field 804 and a CPC-ExecutionCond field 805. The cgi-Info field 804 may be a CGI-InfoNR IE and indicates information about a candidate PSCell, including the identifier of the candidate PCell. The CPC-ExecutionCond field 805 indicates a CPC execution condition. The cgi-Info field 804 is not transparent to the MN 1 and can be recognized by the MN 1. On the other hand, the CPC-ExecutionCond field 805 may be transparent to the MN 1. For example, the MN 1 may associate the CPC execution condition received in the CPC-ExecutionCond field 805 with the identifier of the candidate PSCell and forward it without modification to the UE 3 in an MN RRC (connection) reconfiguration message. The MN 1 can identify the CPC execution condition information item for a given candidate PSCell (cell identifier) by the association between the cgi-Info field 804 and the CPC-ExecutionCond field 805.

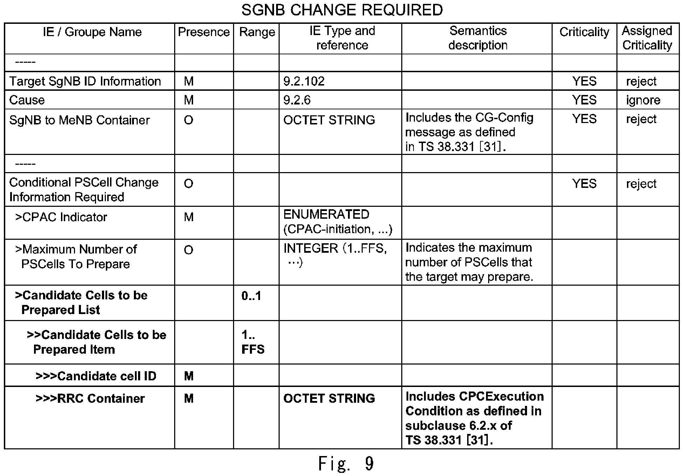

Fig. 9 shows another specific example of a cell identification information item and an execution condition information item. In the example in Fig. 9, the first inter-node message is an SgNB Change Required message. This SgNB Change Required message contains a list of candidate PSCells suggested by the S-SN 2 (e.g., Candidate Cells to be Prepared List IE). The Candidate Cells to be Prepared List IE contains one or more Candidate Cells to be Prepared Item IEs. Each Candidate Cells to be Prepared Item IE contains a Candidate cell ID IE and an RRC Container IE. The Candidate cell ID IE indicates the identifier (e.g., NR-CGI, ECGI) of one candidate PSCell. The RRC Container IE contains a CPC execution condition. That is, a pair of the Candidate Cell ID IE and the RRC Container IE in each Candidate Cells to be Prepared Item IE indicates the association of a candidate PSCell and a CPC execution condition for that candidate PSCell. For example, the MN 1 may associate the CPC execution condition received in the RRC Container IE with the identifier of the candidate PSCell and forward it without any modification to the UE 3 in an MN RRC (connection) reconfiguration message. This allows the information contained in the RRC Container IE to be transparent to the MN 1. The MN 1 can identify the CPC execution condition information item for a given candidate PSCell (cell identifier) by a pair of the Candidate cell ID IE and the RRC Container IE.

Returning to Fig. 7, in step 702, the MN 1 sends a second inter-node message to the T-SN 4 indicating a request for an inter-SN CPC and including information about the plurality of candidate PSCells. The second inter-node message may be an SN Addition Request message (e.g., SgNB Addition Request or S-NODE Addition Request).

In step 703, the MN 1 receives a third inter-node message from the T-SN 4. The third inter-node message may be a SN Addition Request Acknowledge message (e.g., SgNB Addition Request Acknowledge or S-NODE Addition Request Acknowledge). The third inter-node message includes one or more PSCell configuration information items, each indicating a PSCell configuration for a respective one of the one or more accepted candidate PSCells. Each PSCell configuration may be an SCG configuration. Each PSCell configuration information item may be an SN RRC Reconfiguration message containing the PSCell configuration. In other words, each PSCell configuration information item may be an RRC container containing a single corresponding PSCell configuration. The third inter-node message may contain a list of inter-node RRC messages (e.g., a list of CG-Config) each of which is for a respective one of the candidate PSCells accepted by the T-SN 4. The third inter-node message may contain one or more (<=N) RRC containers carrying inter-node RRC messages as many as the number (N) of candidate PSCells accepted by the T-SN 4.

In step 704, the MN 1 selects one or more CPC execution condition information items corresponding to one or more accepted candidate PSCells from the plurality of CPC execution condition information items already received from the S-SN 2 (step 701). In step 705, the MN 1 sends an MN RRC (connection) reconfiguration message to the UE 3 to instruct the UE 3 to perform a conditional reconfiguration for the CPC. The MN RRC reconfiguration message includes the one or more CPC execution condition information items selected in step 704 and the one or more PSCell configuration information items received from the T-SN 4 (step 703).

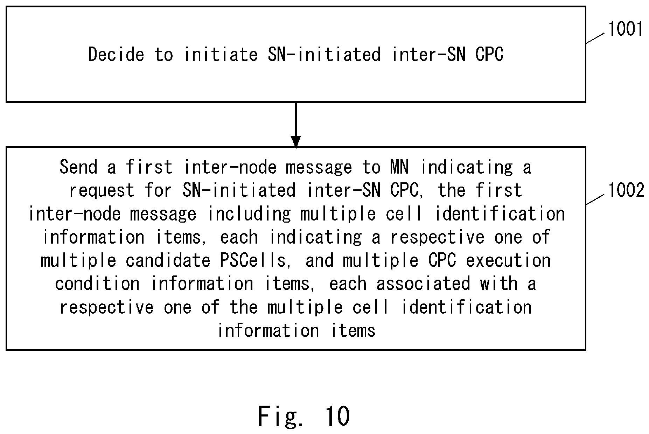

Fig. 10 shows an example of the operation of the S-SN 2. In step 1001, the S-SN 2 decides to initiate an inter-SN CPC with respect to the PSCell in the SCG for the UE1. Step 1002 corresponds to step 701 in Fig. 7. Specifically, the S-SN 2 sends a first inter-node message to the MN 1 indicating a request for an SN-initiated inter-SN CPC. The first inter-node message may be an SN Change Required message (e.g., SgNB Change Required or S-NODE Change Required). The first inter-node message includes a plurality of cell identification information items, each of which indicates a respective one of a plurality of candidate PSCells, and a plurality of CPC execution condition information items, each of which is associated with a respective one of the plurality of cell identification information items. Specific examples of the plurality of cell identification information items and the plurality of CPC execution condition information items are the same as described with respect to step 701 in Fig. 7.

According to the operation described with reference to Figs. 7 to 10, the MN 1 skips additional signaling with the S-SN 2 or does not wait for the completion of such additional signaling before sending an MN RRC reconfiguration message to instruct the CPC to the UE 3, regardless of whether all the candidate PSCells suggested by the MN 1 or S-SN 2 have been accepted by the T-SN 4 or not. This can avoid the increased delay in CPC preparation caused by additional signaling.

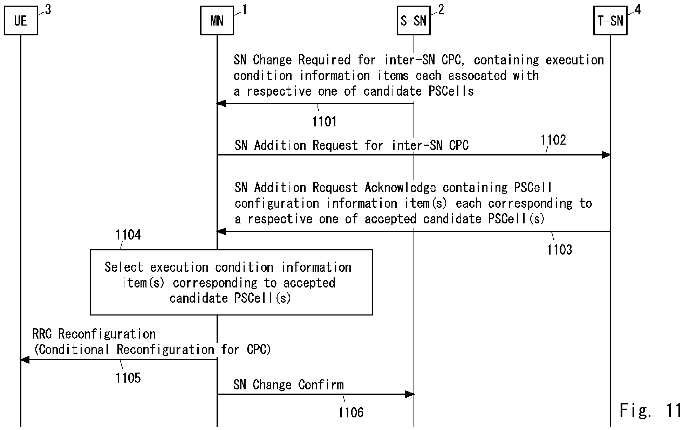

Fig. 11 shows examples of the operation of the MN 1, S-SN 2, T-SN 4, and UE 3. The procedure shown in Fig. 11 is based on the operation of the MN 1 shown in Fig. 7 and the operation of the S-SN 2 shown in Fig. 10. In step 1101, the S-SN 2 initiates an inter-SN CPC procedure by sending an SN Change Required message (e.g., SgNB Change Required or S-NODE Change Required) to the MN 1. In this message, the S-SN 2 indicates the CPC initiation to the MN 1. This message contains the identifier of the T-SN 4. This message further contains a plurality of cell identification information items, each of which indicates a respective one of a plurality of candidate PSCells, and a plurality of CPC execution condition information items, each of which is associated with a respective one of the plurality of cell identification information items. In addition to or instead of the identifier of the T-SN 4, the S-SN 2 may include the identifiers of the candidate PSCells in the message.

In step 1102, the MN 1 requests the T-SN 4 to allocate resources for the UE 3 using an SN Addition procedure. Specifically, the MN 1 sends an SN Addition Request message (e.g., SgNB Addition Request or S-NODE Addition Request) to the T-SN 4. This message indicates the CPC initiation to the T-SN 4 and indicates multiple candidate PSCells to the T-SN 4. In this message, the MN 1 may provide an upper limit (or maximum number) of candidate PSCells to the T-SN 4.

In step 1103, the T-SN 4 responds to the MN 1 with an SN Addition Request Acknowledge message (e.g., SgNB Addition Request Acknowledge or S-NODE Addition Request Acknowledge). This message contains information indicating one or more candidate PSCells that have been accepted by the T-SN 4. Additionally or alternatively, this message contains one or more PSCell configuration information items, each of which indicates a PSCell configuration for a respective one of the one or more accepted candidate PSCells. Each PSCell configuration may be an SCG configuration. Each PSCell configuration information item may be an SN RRC Reconfiguration message containing a PSCell configuration. In other words, each PSCell configuration information item may be an RRC container containing a corresponding PSCell configuration.

The MN 1 knows the one or more candidate PSCells that have been accepted by the T-SN 4 by checking the SN Addition Request Acknowledge message. In step 1104, the MN 1 selects one or more CPC execution condition information items corresponding to the one or more accepted candidate PSCells from the plurality of CPC execution condition information items already received (step 1101) from the S-SN 2.

In step 1105, the MN 1 sends an MN RRC (connection) reconfiguration message to the UE 3 to instruct the UE 3 to perform a conditional reconfiguration for the CPC. The MN RRC reconfiguration message includes the one or more CPC execution condition information items selected in step 1104 and the one or more PSCell configuration information items (step 1103) already received from the T-SN 4. Upon receipt of the MN RRC reconfiguration message, the UE 3 initiates the evaluation of the CPC execution conditions. The UE 3 then initiates access to the T-SN 4 in response to the CPC execution condition(s) of one of the candidate PSCells being satisfied.

In step 1106, the MN 1 sends a SN Change Confirm message (e.g., SgNB Change Confirm or S-NODE Change Confirm) to the S-SN 2. This message informs the S-SN 2 that the allocation of the T-SN 4 resources for the inter-SN CPC has been successful. The SN Change Confirm message in step 1106 causes the S-SN 2 to continue providing user data to the UE 3 until a future CPC execution. In other words, the S-SN 2 receives the SN Change Confirm message but does not stop providing user data to the UE 3. The SN Change Confirm message may contain information indicating that this message is for an inter-SN CPC.

The order in which the messages shown in Fig. 11 are sent is only an example. For example, the SN Change Confirm message in step 1106 may be sent to the S-SN 2 before the MN RRC Reconfiguration message in step 1105. In other words, in response to receiving the SN Addition Request Acknowledge message, the MN 1 may send the MN RRC Reconfiguration message to the UE 3, while sending the SN Change Confirm message to the S-SN 2.

The SN Change Confirm message in step 1106 may indicate to the S-SN 2 which candidate PSCell(s) have been accepted or rejected (i.e., not accepted) by the T-SN 4. After receiving the SN Change Confirm message, the S-SN 2 may perform additional signaling with the MN 1 to modify or update one or more CPC execution conditions that have already been sent to the UE 1. Specifically, the S-SN 2 may send an additional inter-node message to the MN 1. This inter-node message may be an SN Modification Required message (e.g., SgNB Modification Required, S-NODE Modification Required). Alternatively, this inter-node message may be a newly defined Xn/X2 message (e.g., SN Change Confirm Ack). This inter-node message may include at least one updated CPC execution condition information item for at least one of the one or more candidate PSCells accepted by the T-SN 4. The MN 1 may send a second MN RRC reconfiguration message to the UE 3 containing the at least one updated CPC execution condition information item. The second MN RRC reconfiguration message causes the UE 3 to replace the current CPC execution condition information with the corresponding CPC execution condition information contained in the newly received CPC execution condition information item.

### Third Example Embodiment

The example configuration of a radio communication network according to this example embodiment is the same as the examples shown in Fig. 1 and Fig. 2. The following describes the operation of the MN 1, S-SN 2, and T-SN 4 with respect to the inter-SN CPC.

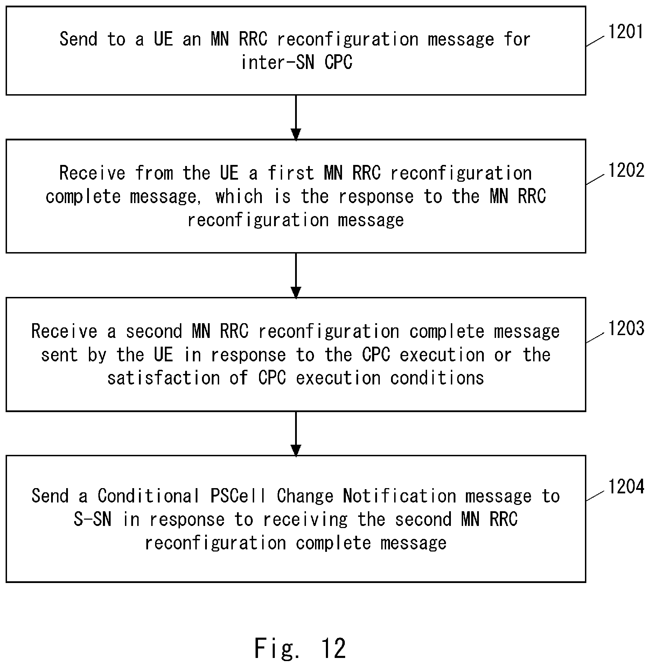

Fig. 12 shows an example of the operation of MN 1 operation for an inter-SN CPC. This inter-SN CPC can be initiated by the MN 1 or by the S-SN 2. In step 1201, the MN 1 sends an MN RRC (connection) reconfiguration message to the UE 3 to instruct the UE 3 to perform a conditional reconfiguration for the CPC. The MN RRC reconfiguration message includes a CPC execution condition and the PSCell configuration (or SCG configuration) of a candidate PSCell.

In step 1202, the MN 1 receives a first MN RRC reconfiguration complete message from the UE 3, which is the response to the MN RRC reconfiguration message of step 1201. The first MN RRC reconfiguration complete message does not contain an SN RRC response message (SN RRC reconfiguration complete message) addressed to the T-SN 4.

In step 1203, the MN 1 receives a second MN RRC reconfiguration complete message sent by the UE 3 in response to the CPC execution or the CPC execution condition being satisfied for one of the candidate PSCells. The second MN RRC reconfiguration complete message contains an SN RRC response message (SN RRC reconfiguration complete message) addressed to the T-SN 4.

In step 1204, in response to receiving the second MN RRC reconfiguration complete message (step 1203), the MN 1 sends a Conditional PSCell Change Notification message to the S-SN 2. The Conditional PSCell Change Notification message may cause the S-SN 2 to stop providing user data to the UE 3.

Although not shown, in response to receiving the second MN RRC reconfiguration complete message (step 1203), the MN 1 may forward the SN RRC reconfiguration complete message contained in the second MN RRC reconfiguration complete message to the T-SN 4 via an SN Reconfiguration Complete message.

According to the operation described with reference to Fig. 12, the MN 1 sends a Conditional PSCell Change Notification message to the S-SN 2 in response to a CPC (execution) being triggered or in response to a CPC execution condition being met. This allows the timing of sending a Conditional PSCell Change Notification message to be optimized.

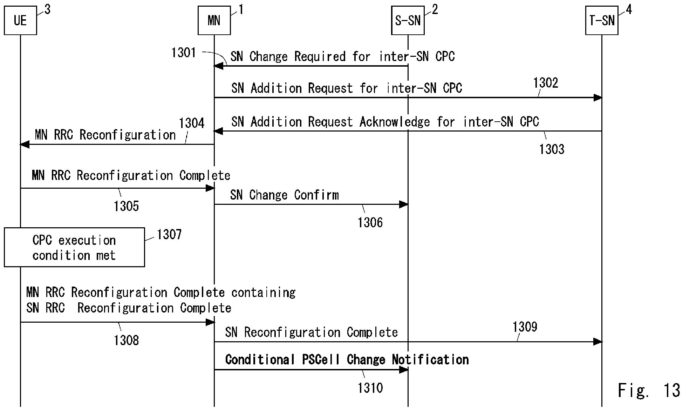

Fig. 13 shows an example of the operation of the MN 1, S-SN 2, T-SN 4, and UE 3 with respect to an SN-initiated inter-SN CPC. In step 1301, the S-SN 2 initiates an inter-SN CPC procedure by sending an SN Change Required message (e.g., SgNB Change Required or S-NODE Change Required) to the MN 1. In this message, the S-SN 2 indicates the CPC initiation to the MN 1. This message contains the identifier of the T-SN 4. This message further contains a CPC execution condition. The MN 1 may or may not be able to comprehend the CPC execution condition set by the S-SN 2.

In step 1302, the MN 1 requests the T-SN 4 to allocate resources for the UE 3 using an SN Addition procedure. Specifically, the MN 1 sends an SN Addition Request message (e.g., SgNB Addition Request or S-NODE Addition Request) to the T-SN 4. In this message, the MN 1 may indicate the CPC initiation to the T-SN 4 and provide the T-SN 4 with an upper limit of candidate PSCells.

In step 1303, the T-SN 4 sends to the MN 1, via an SN Addition Request Acknowledge message, the PSCell ID(s) of the one or more candidate PSCells that have been accepted (or prepared). In addition, the T-SN 4 sends the PSCell configuration (or SCG configuration) of each accepted candidate PSCell to the MN 1 via the SN Addition Request Acknowledge message.

In step 1304, the MN 1 sends an MN RRC (connection) reconfiguration message to the UE 3 to instruct the UE 3 to perform a conditional reconfiguration for the CPC. The MN RRC reconfiguration message contains a CPC configuration (e.g., ConditionalReconfiguration IE). The CPC configuration includes the CPC execution condition set by the S-SN 2 and the PSCell configuration (or SCG configuration) set by the T-SN 4.

In step 1305, the UE 3 transmits a first MN RRC reconfiguration complete message to the MN 1, which is the response to the MN RRC reconfiguration message of step 1304. The first MN RRC reconfiguration complete message does not contain an SN RRC response message (SN RRC reconfiguration complete message) addressed to the T-SN 4.

In step 1306, the MN 1 sends a SN Change Confirm message (e.g., SgNB Change Confirm or S-NODE Change Confirm) to the S-SN 2. The MN 1 may send the SN Change Confirm message (step 1306) may be sent to the S-SN 2 before receiving the MN RRC Reconfiguration Complete message (step 1305) or before sending the MN RRC Reconfiguration message (step 1304). The SN Change Confirm message informs the S-SN 2 that the allocation of the T-SN 4 resources for the inter-SN CPC has been successful. The SN Change Confirm message causes the S-SN 2 to continue providing user data to the UE 3 until a future CPC execution. In other words, the S-SN 2 receives the SN Change Confirm message but does not stop providing user data to the UE 3. The SN Change Confirm message may contain information indicating that this message is for an inter-SN CPC.

The UE 3 maintains the connection with the S-SN 2 after receiving the MN RRC reconfiguration message (step 1304) and starts to evaluate the CPC execution conditions configured by the MN RRC reconfiguration message. In step 1307, the UE 3 then detects that the CPC execution condition is satisfied for one of the candidate PSCells. In step 1308, in response to the CPC execution condition being met, the UE 3 sends a second MN RRC reconfiguration complete message to the MN 1. The second MN RRC reconfiguration complete message contains an SN RRC response message (SN RRC reconfiguration complete message) addressed to the T-SN 4.

In step 1309, the MN 1 informs the T-SN 4 of the success of the SN RRC Reconfiguration procedure via an SN Reconfiguration Complete message. The SN Reconfiguration Complete message forwards the SN RRC reconfiguration complete message contained in the second MN RRC reconfiguration complete message to the T-SN 4.

In step 1310, in response to receiving the second MN RRC reconfiguration complete message (step 1308), the MN 1 sends a Conditional PSCell Change Notification message to the S-SN 2. The Conditional PSCell Change Notification message may cause the S-SN 2 to stop providing user data to the UE 3. The sequence of steps 1309 and 1310 is not limited to that shown in Fig. 13. The MN 1 may send the Conditional PSCell Change Notification message to the S-SN 2 before sending the SN RRC reconfiguration complete message (step 1309).

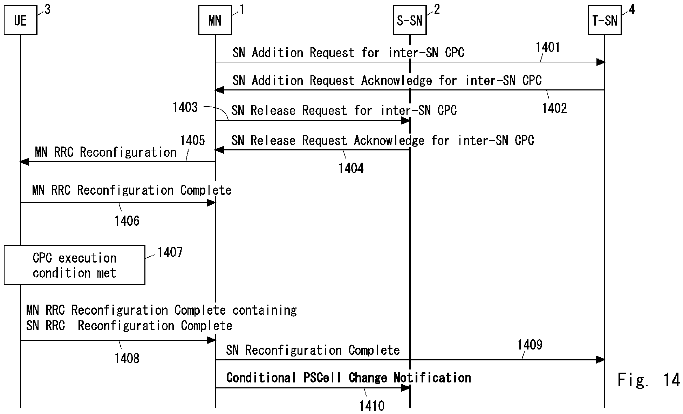

Fig. 14 shows an example of the operation of the MN 1, S-SN 2, T-SN 4, and UE 3 with respect to an MN-initiated inter-SN CPC. In step 1401, the MN 1 initiates an inter-SN CPC procedure by requesting the T-SN 4 to allocate resources for the UE 3 using an SN Addition procedure. Specifically, the MN 1 sends an SN Addition Request message (e.g., SgNB Addition Request or S-NODE Addition Request) to the T-SN 4. In this message, the MN 1 may indicate the CPC initiation to the T-SN 4 and provide the T-SN 4 with an upper limit (or maximum number) of candidate PSCells.

In step 1402, the T-SN 4 sends to the MN 1, via an SN Addition Request Acknowledge message, the PSCell ID(s) of the one or more candidate PSCells that have been prepared. In addition, the T-SN 4 sends the PSCell configuration (or SCG configuration) to the MN 1 via the SN Addition Request Acknowledge message.

In step 1403, the MN 1 sends an SN Release Request message (e.g., SgNB Release Request, S-NODE Release Request) to the S-SN 2. The SN Release Request message informs the S-SN 2 that the allocation of the T-SN 4 resources for the inter-SN CPC has been successful. The SN Release Request message causes the S-SN 2 to continue providing user data to the UE 3 until a future CPC execution. In other words, the S-SN 2 receives the SN Release Request but does not stop providing user data to the UE 3. The SN Release Request may contain information indicating that this message is for an inter-SN CPC. In step 1404, the S-SN 2 responds to the MN 1 with an SN Release Request Acknowledge message.

The MN 1 generates a CPC execution condition(s). The MN 1 generates a CPC configuration (e.g., ConditionalReconfiguration IE) that contains the CPC execution condition(s) generated by the MN 1 and the PSCell configuration (or SCG configuration) received from the T-SN 4. In step 1405, the MN 1 then transmits the CPC configuration to the UE 3 via an MN RRC (Connection) Reconfiguration message. The MN RRC reconfiguration message instructs the UE 3 to perform a conditional reconfiguration for the CPC.

In step 1406, the UE 3 transmits a first MN RRC reconfiguration complete message to the MN 1, which is the response to the MN RRC reconfiguration message of step 1405. The first MN RRC reconfiguration complete message does not contain an SN RRC response message (SN RRC reconfiguration complete message) addressed to the T-SN 4.

The UE 3 maintains the connection with the S-SN 2 after receiving the MN RRC reconfiguration message (step 1405) and starts to evaluate the CPC execution conditions configured by the MN RRC reconfiguration message. In step 1407, the UE 3 then detects that the CPC execution condition is satisfied for one of the candidate PSCells. In step 1408, in response to the CPC execution condition being met, the UE 3 sends a second MN RRC reconfiguration complete message to the MN 1. The second MN RRC reconfiguration complete message contains an SN RRC response message (SN RRC reconfiguration complete message) addressed to the T-SN 4.

In step 1409, the MN 1 informs the T-SN 4 of the success of the SN RRC Reconfiguration procedure via an SN Reconfiguration Complete message. The SN Reconfiguration Complete message forwards the SN RRC reconfiguration complete message contained in the second MN RRC reconfiguration complete message to the T-SN 4.

In step 1410, in response to receiving the second MN RRC reconfiguration complete message (step 1408), the MN 1 sends a Conditional PSCell Change Notification message to the S-SN 2. The Conditional PSCell Change Notification message may cause the S-SN 2 to stop providing user data to the UE 3. The sequence of steps 1409 and 1410 is not limited to that shown in Fig. 14. The MN 1 may send the Conditional PSCell Change Notification message to the S-SN 2 before sending the SN RRC reconfiguration complete message (step 1409).

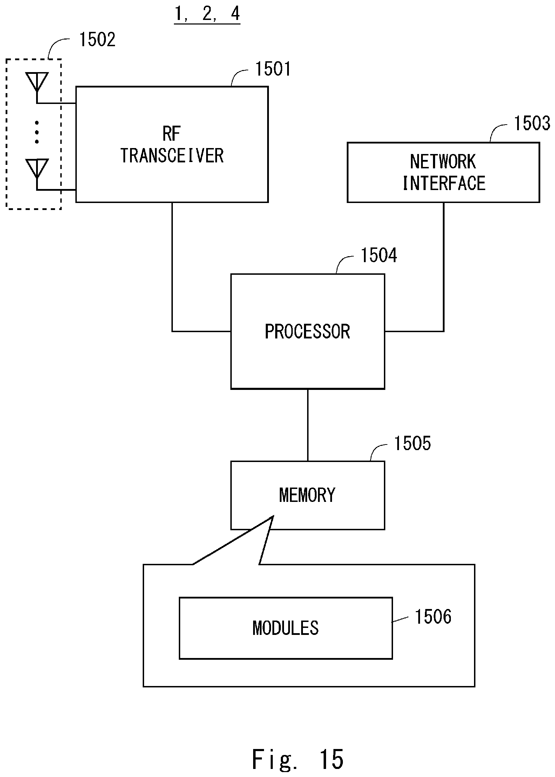

The following provides configuration examples of the MN 1, S-SN 2, T-SN 4, and UE 3 according to the above-described example embodiments. Fig. 15 is a block diagram showing a configuration example of the MN 1 according to the example embodiments described above. The configuration of the S-SN 2 and T-SN 4 may be the same as that shown in Fig. 15. Referring to Fig. 15, the MN 1 includes a Radio Frequency transceiver 1501, a network interface 1503, a processor 1504, and a memory 1505. The RF transceiver 1501 performs analog RF signal processing to communicate with UEs including the UE 3. The RF transceiver 1501 may include a plurality of transceivers. The RF transceiver 1501 is coupled to an antenna array 1502 and the processor 1504. The RF transceiver 1501 receives modulation symbol data from the processor 1504, generates a transmission RF signal, and supplies the transmission RF signal to the antenna array 1502. The RF transceiver 1501 generates a baseband reception signal based on a reception RF signal received by the antenna array 1502 and supplies the baseband reception signal to the processor 1504. The RF transceiver 1501 may include an analog beamformer circuit for beamforming. The analog beamformer circuit includes, for example, a plurality of phase shifters and a plurality of power amplifiers.

The network interface 1503 is used to communicate with network nodes (e.g., S-SN 2, T-SN 4, and control and transfer nodes in the core network). The network interface 1503 may include, for example, a Network Interface Card (NIC) that complies with the IEEE 802.3 series.

The processor 1504 performs digital baseband signal processing (data-plane processing) and control-plane processing for radio communication. The processor 1504 may include a plurality of processors. For example, the processor 1504 may include a modem processor (e.g., Digital Signal Processor (DSP)) for performing the digital baseband signal processing and a protocol stack processor (e.g., Central Processing Unit (CPU) or Micro Processing Unit (MPU)) for performing the control-plane processing. The processor 1504 may include a digital beamformer module for beamforming. The digital beamformer module may include a Multiple Input Multiple Output (MIMO) encoder and precoder.

The memory 1505 is composed of a combination of a volatile memory and a non-volatile memory. The volatile memory is, for example, a Static Random Access Memory (SRAM), a Dynamic RAM (DRAM), or a combination thereof. The non-volatile memory may be a Mask Read Only Memory (MROM), an Electrically Erasable Programmable ROM (EEPROM), a flash memory, or a hard disk drive, or any combination thereof. The memory 1505 may include a storage located away from the processor 1504. In this case, the processor 1504 may access the memory 1505 via the network interface 1503 or an I/O interface not shown.

The memory 1505 may store one or more software modules (computer programs) 1506 including instructions and data for performing processing by the MN 1 described in the above example embodiments. In some implementations, the processor 1504 may be configured to load and execute the software module(s) 1506 from the memory 1505, thereby performing the processing of the MN 1 described in the above example embodiments.

When the MN 1 is a CU (e.g., eNB-CU or gNB-CU) or a CU-CP, the MN 1 does not need to include the RF transceiver 1501 (and the antenna array 1502).

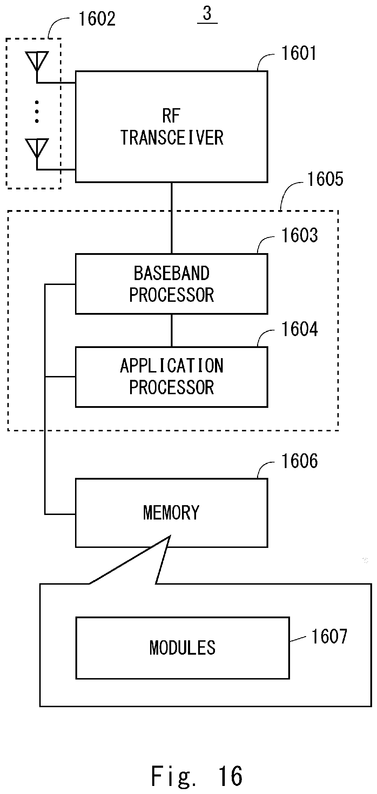

Fig. 16 is a block diagram showing a configuration example of the UE 3. The radio frequency (RF) transceiver 1601 performs analog RF signal processing to communicate with the MN 1, the S-SN 2 and the T-SN 4. The RF transceiver 1601 may include a plurality of transceivers. The analog RF signal processing performed by the RF transceiver 1601 includes frequency up-conversion, frequency downconversion, and amplification. The RF transceiver 1601 is coupled to the antenna array 1602 and the baseband processor 1603. The RF transceiver 1601 receives modulation symbol data (or OFDM symbol data) from the baseband processor 1603, generates a transmission RF signal, and supplies the transmission RF signal to the antenna array 1602. The RF transceiver 1601 generates a baseband reception signal based on the reception RF signal received by the antenna array 1602 and supplies the baseband reception signal to the baseband processor 1603. The RF transceiver 1601 may include an analog beamformer circuit for beamforming. The analog beamformer circuit includes, for example, a plurality of phase shifters and a plurality of power amplifiers.

The baseband processor 1603 performs digital baseband signal processing (data-plane processing) and control-plane processing for wireless communication. The digital baseband signal processing includes (a) data compression/decompression, (b) data segmentation/concatenation, (c) transmission format (transmission frame) composition/decomposition, (d) channel encoding/decoding, (e) modulation (i.e., symbol mapping)/demodulation, and (f) Inverse Fast Fourier Transform (IFFT) generation of OFDM symbol data (baseband OFDM signal). On the other hand, the control-plane processing includes communication management of layer 1 (e.g., transmission power control), layer 2 (e.g., radio resource management, and hybrid automatic repeat request (HARQ) processing), and layer 3 (e.g., signaling regarding attachment, mobility, and call management).

For example, the digital baseband signal processing performed by the baseband processor 1603 may include signal processing in the Service Data Adaptation Protocol (SDAP) layer, Packet Data Convergence Protocol (PDCP) layer, Radio Link Control (RLC) layer, MAC layer, and PHY layer. The control-plane processing performed by the baseband processor 1603 may also include processing of Non-Access Stratum (NAS) protocols, RRC protocols, and MAC Control Elements (CEs).

The baseband processor 1603 may perform MIMO encoding and precoding for beamforming.

The baseband processor 1603 may include a modem processor (e.g., DSP) that performs the digital baseband signal processing and a protocol stack processor (e.g., CPU or MPU) that performs the control-plane processing. In this case, the protocol stack processor performing the control-plane processing may be integrated with an application processor 1604 described later.

The application processor 1604 may also be referred to as a CPU, an MPU, a microprocessor, or a processor core. The application processor 1604 may include a plurality of processors (processor cores). The application processor 1604 loads a system software program (Operating System (OS)) and various application programs (e.g., a voice call application, a web browser, a mailer, a camera operation application, a music player application) from a memory 1606 or from another memory (not shown) and executes these programs, thereby providing various functions of the UE 3.

In some implementations, as represented by the dashed line (1605) in Fig. 16, the baseband processor 1603 and the application processor 1604 may be integrated on a single chip. In other words, the baseband processor 1603 and the application processor 1604 may be implemented in a single System on Chip (SoC) device 1605. A SoC device may be referred to as a system Large Scale Integration (LSI) or a chipset.

The memory 1606 is a volatile memory or a non-volatile memory, or a combination thereof. The memory 1606 may include a plurality of physically independent memory devices. The volatile memory is, for example, SRAM, DRAM, or a combination thereof. The non-volatile memory may be MROM, an EEPROM, a flash memory, a hard disk drive, or any combination thereof. The memory 1606 may include, for example, an external memory device that can be accessed by the baseband processor 1603, the application processor 1604, or the SoC 1605. The memory 1606 may include an internal memory device that is integrated into the baseband processor 1603, the application processor 1604, or the SoC 1605. Further, the memory 1606 may include a memory in a Universal Integrated Circuit Card (UICC).

The memory 1606 may store one or more software modules (computer programs) 1607 including instructions and data for processing by the UE 3 described in the above example embodiments. In some implementations, the baseband processor 1603 or the application processor 1604 may load the software module(s) 1607 from the memory 1606 and execute the loaded software module(s) 1607, thereby performing the processing of the UE 3 described in the above example embodiments with reference to the drawings.

The control-plane processing and operations performed by the UE 3 described in the above embodiments can be achieved by elements other than the RF transceiver 1601 and the antenna array 1602, i.e., achieved by the memory 1606, which stores the software modules 1607, and one or both of the baseband processor 1603 and the application processor 1604.

As described using Figs. 15 and 16, each of the processors in the MN 1, S-SN 2, T-SN 4, and UE 3 according to the example embodiments described above can execute one or more programs, containing a set of instructions, to cause a computer to perform an algorithm described with reference to the drawings. Each of these programs contains a set of instructions (or software codes) that, when loaded into a computer, causes the computer to perform one or more of the functions described in the example embodiments. Each of these programs may be stored in a non-transitory computer readable medium or a tangible storage medium. By way of example, and not limitation, non-transitory computer readable media or tangible storage media can include a random-access memory (RAM), a read-only memory (ROM), a flash memory, a solid-state drive (SSD) or other memory technologies, CD-ROM, digital versatile disk (DVD), Blu-ray (registered mark) disc or other optical disk storage, magnetic cassettes, magnetic tape, magnetic disk storage or other magnetic storage devices. Each program may be transmitted on a transitory computer readable medium or a communication medium. By way of example, and not limitation, transitory computer readable media or communication media can include electrical, optical, acoustical, or other form of propagated signals.

### Other Example Embodiments

In one or more of the example embodiments described above, the T-SN 4 selects a candidate PSCell(s) to be a target for the CPC from one or more candidate PSCells suggested by the S-SN 2. Alternatively, the T-SN 4 may itself select one or more other cells that are different from (i.e., not included in) the suggested candidate PSCells to be candidates for the PSCell. In this case, the T-SN 4 may send information to the MN 1 in the third inter-node message indicating one or more candidate PSCells suggested by the S-SN 2 and accepted by the T-SN 4 and candidate PSCells selected by the T-SN 4 itself. The T-SN 4 also sends to the MN 1 the PSCell configuration (or SCG configuration) for each of the candidate PSCells selected by the T-SN 4 itself. If the MN 1 is notified by the T-SN 4 of one or more other candidate PSCells (i.e., candidate PSCells selected by the T-SN 4 itself), even if all of the one or more candidate PSCells suggested by the S-SN 2 have been accepted, it sends information about this to the S-SN 2. In response, the S-SN 2 sends one or more updated CPC execution condition information items to the MN 1. The updated CPC execution condition information item (s) includes at least CPC execution conditions for the PSCell candidate cells selected by the T-SN 4. This allows the above example embodiments to be applied even when the T-SN 4 can flexibly select candidate PSCells for the CPC.

In one or more of the example embodiments described above, the T-SN 4 sends information about the one or more accepted candidate PSCells to the M-SN 1 in the third inter-node message. At that time, the T-SN 4 may generate an inter-node RRC message (e.g., CG-Config) for each of the one or more candidate PSCells and include it in the third inter-node message. The third inter-node message may contain a list of inter-node RRC messages (e.g., a list of CG-Config) each of which is for a respective one of the candidate PSCells accepted by T-SN 4. The third inter-node message may contain one or more (<=N) RRC containers carrying inter-node RRC messages as many as the number (N) of candidate PSCells accepted by the T-SN 4. The T-SN4 may associate (e.g., in list form) each of the inter-node RRC messages (e.g., CG-Config) with each of the X2/Xn-level information items indicating the accepted candidate PSCells, and send them to the MN1.

Further, the above-described example embodiments are merely examples of applications of the technical ideas obtained by the inventors. These technical ideas are not limited to the above-described example embodiments and various modifications can be made thereto.

For example, the whole or part of the example embodiments disclosed above can be described as, but not limited to, the following supplementary notes.

### (Supplementary Note 1)

A Radio Access Network (RAN) node configured to operate as a Master Node (MN) associated with a Master Cell Group (MCG) in dual connectivity for a User Equipment (UE), the RAN node comprising:
at least one memory; and
at least one processor coupled to the at least one memory and configured to:
   receive from a source Secondary Node (SN) a first inter-node message indicating a request for an SN-initiated inter-SN Conditional PSCell Change (CPC), wherein the first inter-node message includes one or more CPC execution condition information items indicating a plurality of CPC execution conditions each associated with a respective one of a plurality of candidate Primary SCG Cells (PSCells);
   send to a target SN a second inter-node message indicating a request for an inter-SN CPC and including information about the plurality of candidate PSCells;
   receive a third inter-node message from the target SN, wherein the third inter-node message includes one or more PSCell configuration information items each indicating a PSCell configuration of a respective one of one or more accepted candidate PSCells, and the third inter-node message indicates to the MN whether all of the plurality of candidate PSCells have been accepted or not;
   if the third inter-node message indicates that all of the plurality of candidate PSCells have been accepted, transmit to the UE a first MN Radio Resource Control (RRC) reconfiguration message including the one or more CPC execution condition information items and the one or more PSCell configuration information items, while skipping additional signaling with the source SN or without waiting for completion of the additional signaling; and
   if the third inter-node message indicates that only a subset of the plurality of candidate PSCells has been accepted, perform the additional signaling with the source SN to obtain one or more updated CPC execution condition information items, and transmit to the UE a first MN RRC reconfiguration message including the one or more updated CPC execution condition information items and the one or more PSCell configuration information items.

### (Supplementary Note 2)

The RAN node according to Supplementary Note 1, wherein the one or more updated CPC execution condition information items indicate one or more CPC execution conditions for only the one or more accepted candidate PSCells.

### (Supplementary Note 3)

The RAN node according to Supplementary Note 1 or 2, wherein the additional signaling comprises:
sending to the source SN a fourth inter-node message indicating the one or more accepted candidate PSCells or indicating one or more candidate PSCells rejected by the target SN; and
receiving by the MN from the source SN a fifth inter-node message including the one or more updated CPC execution condition information items.

### (Supplementary Note 4)

The RAN node according to any one of Supplementary Notes 1 to 3, wherein the one or more CPC execution condition information items are sent by the first inter-node message using one or more containers that are transparent to the MN.

### (Supplementary Note 5)

The RAN node according to Supplementary Note 3, wherein the one or more updated CPC execution condition information items are sent by the fifth inter-node message using one or more containers that are transparent to the MN.

### (Supplementary Note 6)

A method performed by a Radio Access Network (RAN) node configured to operate as a Master Node (MN) associated with a Master Cell Group (MCG) in dual connectivity for a User Equipment (UE), the method comprising:
receiving from a source Secondary Node (SN) a first inter-node message indicating a request for an SN-initiated inter-SN Conditional PSCell Change (CPC), wherein the first inter-node message includes one or more CPC execution condition information items indicating a plurality of CPC execution conditions each associated with a respective one of a plurality of candidate Primary SCG Cells (PSCells);
sending to a target SN a second inter-node message indicating a request for an inter-SN CPC and including information about the plurality of candidate PSCells;
receiving a third inter-node message from the target SN, wherein the third inter-node message includes one or more PSCell configuration information items each indicating a PSCell configuration of a respective one of one or more accepted candidate PSCells, and the third inter-node message indicates to the MN whether all of the plurality of candidate PSCells have been accepted or not;
if the third inter-node message indicates that all of the plurality of candidate PSCells have been accepted, transmitting to the UE a first MN Radio Resource Control (RRC) reconfiguration message including the one or more CPC execution condition information items and the one or more PSCell configuration information items, while skipping additional signaling with the source SN or without waiting for completion of the additional signaling; and
if the third inter-node message indicates that only a subset of the plurality of candidate PSCells has been accepted, performing the additional signaling with the source SN to obtain one or more updated CPC execution condition information items, and transmitting to the UE a first MN RRC reconfiguration message including the one or more updated CPC execution condition information items and the one or more PSCell configuration information items.

### (Supplementary Note 7)

A program for causing a computer to perform a method for a Radio Access Network (RAN) node configured to operate as a Master Node (MN) associated with a Master Cell Group (MCG) in dual connectivity for a User Equipment (UE), the method comprising:
receiving from a source Secondary Node (SN) a first inter-node message indicating a request for an SN-initiated inter-SN Conditional PSCell Change (CPC), wherein the first inter-node message includes one or more CPC execution condition information items indicating a plurality of CPC execution conditions each associated with a respective one of a plurality of candidate Primary SCG Cells (PSCells);
sending to a target SN a second inter-node message indicating a request for an inter-SN CPC and including information about the plurality of candidate PSCells;
receiving a third inter-node message from the target SN, wherein the third inter-node message includes one or more PSCell configuration information items each indicating a PSCell configuration of a respective one of one or more accepted candidate PSCells, and the third inter-node message indicates to the MN whether all of the plurality of candidate PSCells have been accepted or not;
if the third inter-node message indicates that all of the plurality of candidate PSCells have been accepted, transmitting to the UE a first MN Radio Resource Control (RRC) reconfiguration message including the one or more CPC execution condition information items and the one or more PSCell configuration information items, while skipping additional signaling with the source SN or without waiting for completion of the additional signaling; and
if the third inter-node message indicates that only a subset of the plurality of candidate PSCells has been accepted, performing the additional signaling with the source SN to obtain one or more updated CPC execution condition information items, and transmitting to the UE a first MN RRC reconfiguration message including the one or more updated CPC execution condition information items and the one or more PSCell configuration information items.

### (Supplementary Note 8)

A Radio Access Network (RAN) node configured to operate as a target Secondary Node (SN) associated with a Secondary Cell Group (SCG) in dual connectivity for a User Equipment (UE), the RAN node comprising:
at least one memory; and
at least one processor coupled to the at least one memory and configured to:
   receive from a Master Node (MN) a second inter-node message indicating a request for an inter-SN Conditional PSCell Change (CPC) and including information about a plurality of candidate Primary SCG Cells (PSCells); and
   send a third inter-node message to the MN,
wherein the third inter-node message includes one or more PSCell configuration information items each indicating a PSCell configuration of a respective one of one or more accepted candidate PSCells, and the third inter-node message indicates to the MN whether all of the plurality of candidate PSCells have been accepted or not.

### (Supplementary Note 9)

A method performed by a Radio Access Network (RAN) node configured to operate as a target Secondary Node (SN) associated with a Secondary Cell Group (SCG) in dual connectivity for a User Equipment (UE), the method comprising:
receiving from a Master Node (MN) a second inter-node message indicating a request for an inter-SN Conditional PSCell Change (CPC) and including information about a plurality of candidate Primary SCG Cells (PSCells); and
sending a third inter-node message to the MN,
wherein the third inter-node message includes one or more PSCell configuration information items each indicating a PSCell configuration of a respective one of one or more accepted candidate PSCells, and the third inter-node message indicates to the MN whether all of the plurality of candidate PSCells have been accepted or not.

### (Supplementary Note 10)

A program for causing a computer to perform a method for a Radio Access Network (RAN) node configured to operate as a target Secondary Node (SN) associated with a Secondary Cell Group (SCG) in dual connectivity for a User Equipment (UE), the method comprising:
receiving from a Master Node (MN) a second inter-node message indicating a request for an inter-SN Conditional PSCell Change (CPC) and including information about a plurality of candidate Primary SCG Cells (PSCells); and
sending a third inter-node message to the MN,
wherein the third inter-node message includes one or more PSCell configuration information items each indicating a PSCell configuration of a respective one of one or more accepted candidate PSCells, and the third inter-node message indicates to the MN whether all of the plurality of candidate PSCells have been accepted or not.

### (Supplementary Note 11)

A Radio Access Network (RAN) node configured to operate as a Master Node (MN) associated with a Master Cell Group (MCG) in dual connectivity for a User Equipment (UE), the RAN node comprising:
at least one memory; and
at least one processor coupled to the at least one memory and configured to:
   receive from a source Secondary Node (SN) a first inter-node message indicating a request for an SN-initiated inter-SN Conditional PSCell Change (CPC), wherein the first inter-node message includes a plurality of cell identification information items each indicating a respective one of a plurality of candidate Primary SCG Cells (PSCells), and also includes a plurality of CPC execution condition information items each associated with a respective one of the plurality of cell identification information items;
   send to a target SN a second inter-node message indicating a request for an inter-SN CPC and including information about the plurality of candidate PSCells;
   receive from the target SN a third inter-node message including one or more PSCell configuration information items each indicating a PSCell configuration of a respective one of one or more accepted candidate PSCells;
   select one or more CPC execution condition information items corresponding to the one or more accepted candidate PSCells from the plurality of CPC execution condition information items; and
   transmit to the UE a first MN Radio Resource Control (RRC) reconfiguration message including the one or more selected CPC execution condition information items and the one or more PSCell configuration information items.

### (Supplementary Note 12)

The RAN node according to Supplementary Note 11, wherein the at least one processor is configured to:
send to the source SN a fourth inter-node message indicating the one or more accepted candidate PSCells or indicating one or more candidate PSCells rejected by the target SN; and
receive a fifth inter-node message from the source SN after sending the fourth inter-node message, and
wherein the first MN RRC reconfiguration message is sent to the UE before the MN receives the fifth inter-node message.

### (Supplementary Note 13)

The RAN node according to Supplementary Note 12, wherein
the fifth inter-node message includes at least one updated CPC execution condition information item for at least one of the one or more accepted candidate PSCells, and
the at least one processor is configured to send to the UE a second MN RRC reconfiguration message including the at least one updated CPC execution condition information item.

### (Supplementary Note 14)

The RAN node according to any one of Supplementary Notes 11 to 13, wherein
the plurality of cell identification information items are sent by the first inter-node message to the MN in a non-transparent manner, and
each of the plurality of CPC execution condition information items is sent by the first inter-node message using a container that is transparent to the MN.

### (Supplementary Note 15)

The RAN node according to any one of Supplementary Notes 11 to 14, wherein
the first inter-node message is an SN Change Required message,
the second inter-node message is an SN Addition Request message, and
the third inter-node message is an SN Addition Request Acknowledge message.

### (Supplementary Note 16)

The RAN node according to Supplementary Note 12, wherein the fourth inter-node message is an SN Change Confirm message.

### (Supplementary Note 17)

The RAN node according to Supplementary Note 16, wherein the fifth inter-node message is an SN Modification Required message.

### (Supplementary Note 18)

A method performed by a Radio Access Network (RAN) node configured to operate as a Master Node (MN) associated with a Master Cell Group (MCG) in dual connectivity for a User Equipment (UE), the method comprising:
receiving from a source Secondary Node (SN) a first inter-node message indicating a request for an SN-initiated inter-SN Conditional PSCell Change (CPC), wherein the first inter-node message includes a plurality of cell identification information items each indicating a respective one of a plurality of candidate Primary SCG Cells (PSCells), and also includes a plurality of CPC execution condition information items each associated with a respective one of the plurality of cell identification information items;
sending to a target SN a second inter-node message indicating a request for an inter-SN CPC and including information about the plurality of candidate PSCells;
receiving from the target SN a third inter-node message including one or more PSCell configuration information items each indicating a PSCell configuration of a respective one of one or more accepted candidate PSCells;
selecting one or more CPC execution condition information items corresponding to the one or more accepted candidate PSCells from the plurality of CPC execution condition information items; and
transmitting to the UE a first MN Radio Resource Control (RRC) reconfiguration message including the one or more selected CPC execution condition information items and the one or more PSCell configuration information items.

### (Supplementary Note 19)

A program for causing a computer to perform a method for a Radio Access Network (RAN) node configured to operate as a Master Node (MN) associated with a Master Cell Group (MCG) in dual connectivity for a User Equipment (UE), the method comprising:
receiving from a source Secondary Node (SN) a first inter-node message indicating a request for an SN-initiated inter-SN Conditional PSCell Change (CPC), wherein the first inter-node message includes a plurality of cell identification information items each indicating a respective one of a plurality of candidate Primary SCG Cells (PSCells), and also includes a plurality of CPC execution condition information items each associated with a respective one of the plurality of cell identification information items;
sending to a target SN a second inter-node message indicating a request for an inter-SN CPC and including information about the plurality of candidate PSCells;
receiving from the target SN a third inter-node message including one or more PSCell configuration information items each indicating a PSCell configuration of a respective one of one or more accepted candidate PSCells;
selecting one or more CPC execution condition information items corresponding to the one or more accepted candidate PSCells from the plurality of CPC execution condition information items; and
transmitting to the UE a first MN Radio Resource Control (RRC) reconfiguration message including the one or more selected CPC execution condition information items and the one or more PSCell configuration information items.

### (Supplementary Note 20)

A Radio Access Network (RAN) node configured to operate as a source Secondary Node (SN) associated with a Secondary Cell Group (SCG) in dual connectivity for a User Equipment (UE), the RAN node comprising:
at least one memory; and
at least one processor coupled to the at least one memory and configured to send to a Master Node (MN) a first inter-node message indicating a request for an SN-initiated inter-SN Conditional PSCell Change (CPC),
wherein the first inter-node message includes a plurality of cell identification information items each indicating a respective one of a plurality of candidate Primary SCG Cells (PSCells), and also includes a plurality of CPC execution condition information items each associated with a respective one of the plurality of cell identification information items.

### (Supplementary Note 21)

The RAN node according to Supplementary Note 20, wherein the first inter-node message enables the MN to select one or more CPC execution condition information items corresponding to one or more candidate PSCells accepted by the target SN from the plurality of CPC execution condition information items.

### (Supplementary Note 22)

The RAN node according to Supplementary Note 20 or 21, wherein
the plurality of cell identification information items are sent by the first inter-node message to the MN in a non-transparent manner, and
each of the plurality of CPC execution condition information items is sent by the first inter-node message using a container that is transparent to the MN.

### (Supplementary Note 23)

The RAN node according to any one of Supplementary Notes 20 to 22, wherein the first inter-node message is an SN Change Required message.

### (Supplementary Note 24)

A method performed by a Radio Access Network (RAN) node configured to operate as a source Secondary Node (SN) associated with a Secondary Cell Group (SCG) in dual connectivity for a User Equipment (UE), the method comprising:
sending to a Master Node (MN) a first inter-node message indicating a request for an SN-initiated inter-SN Conditional PSCell Change (CPC),
wherein the first inter-node message includes a plurality of cell identification information items each indicating a respective one of a plurality of candidate Primary SCG Cells (PSCells), and also includes a plurality of CPC execution condition information items each associated with a respective one of the plurality of cell identification information items.

### (Supplementary Note 25)

A program for causing a computer to perform a method for a Radio Access Network (RAN) node configured to operate as a source Secondary Node (SN) associated with a Secondary Cell Group (SCG) in dual connectivity for a User Equipment (UE), the method comprising:
sending to a Master Node (MN) a first inter-node message indicating a request for an SN-initiated inter-SN Conditional PSCell Change (CPC),
wherein the first inter-node message includes a plurality of cell identification information items each indicating a respective one of a plurality of candidate Primary SCG Cells (PSCells), and also includes a plurality of CPC execution condition information items each associated with a respective one of the plurality of cell identification information items.

### (Supplementary Note 26)

A Radio Access Network (RAN) node configured to operate as a Master Node (MN) associated with a Master Cell Group (MCG) in dual connectivity for a User Equipment (UE), the RAN node comprising:
at least one memory; and
at least one processor coupled to the at least one memory and configured to:
   transmit an MN Radio Resource Control (RRC) reconfiguration message to the UE, the MN RRC reconfiguration message including an execution condition for an inter-SN Conditional PSCell Change (CPC) and a configuration of a candidate Primary SCG Cell (PSCell);
   receive from the UE a first MN RRC reconfiguration complete message sent in response to the MN RRC reconfiguration message;
   receive a second MN RRC reconfiguration complete message sent by the UE in response to execution of the CPC or satisfaction of the execution condition; and
   send a Conditional PSCell Change Notification message to a source Secondary Node (SN) in response to receiving the second MN RRC reconfiguration complete message.

### (Supplementary Note 27)

The RAN node according to Supplementary Note 26, wherein the Conditional PSCell Change Notification message causes the source SN to stop providing user data to the UE.

### (Supplementary Note 28)

The RAN node according to Supplementary Note 26 or 27, wherein the second MN RRC reconfiguration complete message contains an SN RRC reconfiguration complete message, and
the at least one processor is configured to forward the SN RRC reconfiguration complete message to the target SN via an SN Reconfiguration Complete message in response to receiving the second MN RRC reconfiguration complete message.

### (Supplementary Note 29)

The RAN node according to any one of Supplementary Notes 26 to 28, wherein the at least one processor is configured to send an SN Release Request message or an SN Change Confirm message to the source SN during a procedure that is for preparing the inter-SN CPC and is performed before receiving the second MN RRC reconfiguration completion message.

### (Supplementary Note 30)

The RAN node according to Supplementary Note 29, wherein the SN Release Request message or the SN Change Confirm message causes the source SN to continue providing user data to the UE until the CPC is executed.

### (Supplementary Note 31)

The RAN node according to Supplementary Note 29 or 30, wherein the SN Release Request message or the SN Change Confirm message includes information indicating that this message is for an inter-SN CPC.

### (Supplementary Note 32)

A method performed by a Radio Access Network (RAN) node configured to operate as a Master Node (MN) associated with a Master Cell Group (MCG) in dual connectivity for a User Equipment (UE), the method comprising:
transmitting an MN Radio Resource Control (RRC) reconfiguration message to the UE, the MN RRC reconfiguration message including an execution condition for an inter-SN Conditional PSCell Change (CPC) and a configuration of a candidate Primary SCG Cell (PSCell);
receiving from the UE a first MN RRC reconfiguration complete message sent in response to the MN RRC reconfiguration message;
receiving a second MN RRC reconfiguration complete message sent by the UE in response to execution of the CPC or satisfaction of the execution condition; and
sending a Conditional PSCell Change Notification message to a source Secondary Node (SN) in response to receiving the second MN RRC reconfiguration complete message.

### (Supplementary Note 33)

A program for causing a computer to perform a method for a Radio Access Network (RAN) node configured to operate as a Master Node (MN) associated with a Master Cell Group (MCG) in dual connectivity for a User Equipment (UE), the method comprising:
transmitting an MN Radio Resource Control (RRC) reconfiguration message to the UE, the MN RRC reconfiguration message including an execution condition for an inter-SN Conditional PSCell Change (CPC) and a configuration of a candidate Primary SCG Cell (PSCell);
receiving from the UE a first MN RRC reconfiguration complete message sent in response to the MN RRC reconfiguration message;
receiving a second MN RRC reconfiguration complete message sent by the UE in response to execution of the CPC or satisfaction of the execution condition; and
sending a Conditional PSCell Change Notification message to a source Secondary Node (SN) in response to receiving the second MN RRC reconfiguration complete message.

This application is based upon and claims the benefit of priority from Japanese Patent Application No. 2021-116603, filed on July 14, 2021, the disclosure of which is incorporated herein in its entirety by reference.

### Reference Signs List

- 1: Master Node (MN)
- 2: Source Secondary Node (S-SN)
- 3: User Equipment (UE)
- 4: Target Secondary Node (T-SN)
- 1504: Processor
- 1505: Memory
- 1506: Modules
- 1603: Baseband Processor
- 1604: Application Processor
- 1606: Memory
- 1607: Modules

## Claims

1. A Radio Access Network (RAN) node configured to operate as a Master Node (MN) associated with a Master Cell Group (MCG) in dual connectivity for a User Equipment (UE), the RAN node comprising:
at least one memory; and
at least one processor coupled to the at least one memory and configured to:
receive from a source Secondary Node (SN) a first inter-node message indicating a request for an SN-initiated inter-SN Conditional PSCell Change (CPC), wherein the first inter-node message includes one or more CPC execution condition information items indicating a plurality of CPC execution conditions each associated with a respective one of a plurality of candidate Primary SCG Cells (PSCells);
send to a target SN a second inter-node message indicating a request for an inter-SN CPC and including information about the plurality of candidate PSCells;
receive a third inter-node message from the target SN, wherein the third inter-node message includes one or more PSCell configuration information items each indicating a PSCell configuration of a respective one of one or more accepted candidate PSCells, and the third inter-node message indicates to the MN whether all of the plurality of candidate PSCells have been accepted or not;
if the third inter-node message indicates that all of the plurality of candidate PSCells have been accepted, transmit to the UE a first MN Radio Resource Control (RRC) reconfiguration message including the one or more CPC execution condition information items and the one or more PSCell configuration information items, while skipping additional signaling with the source SN or without waiting for completion of the additional signaling; and
if the third inter-node message indicates that only a subset of the plurality of candidate PSCells has been accepted, perform the additional signaling with the source SN to obtain one or more updated CPC execution condition information items, and transmit to the UE a first MN RRC reconfiguration message including the one or more updated CPC execution condition information items and the one or more PSCell configuration information items.

2. The RAN node according to claim 1, wherein the one or more updated CPC execution condition information items indicate one or more CPC execution conditions for only the one or more accepted candidate PSCells.

3. The RAN node according to claim 1 or 2, wherein the additional signaling comprises:
sending to the source SN a fourth inter-node message indicating the one or more accepted candidate PSCells or indicating one or more candidate PSCells rejected by the target SN; and
receiving by the MN from the source SN a fifth inter-node message including the one or more updated CPC execution condition information items.

4. The RAN node according to any one of claims 1 to 3, wherein the one or more CPC execution condition information items are sent by the first inter-node message using one or more containers that are transparent to the MN.

5. The RAN node according to claim 3, wherein the one or more updated CPC execution condition information items are sent by the fifth inter-node message using one or more containers that are transparent to the MN.

6. A method performed by a Radio Access Network (RAN) node configured to operate as a Master Node (MN) associated with a Master Cell Group (MCG) in dual connectivity for a User Equipment (UE), the method comprising:
receiving from a source Secondary Node (SN) a first inter-node message indicating a request for an SN-initiated inter-SN Conditional PSCell Change (CPC), wherein the first inter-node message includes one or more CPC execution condition information items indicating a plurality of CPC execution conditions each associated with a respective one of a plurality of candidate Primary SCG Cells (PSCells);
sending to a target SN a second inter-node message indicating a request for an inter-SN CPC and including information about the plurality of candidate PSCells;
receiving a third inter-node message from the target SN, wherein the third inter-node message includes one or more PSCell configuration information items each indicating a PSCell configuration of a respective one of one or more accepted candidate PSCells, and the third inter-node message indicates to the MN whether all of the plurality of candidate PSCells have been accepted or not;
if the third inter-node message indicates that all of the plurality of candidate PSCells have been accepted, transmitting to the UE a first MN Radio Resource Control (RRC) reconfiguration message including the one or more CPC execution condition information items and the one or more PSCell configuration information items, while skipping additional signaling with the source SN or without waiting for completion of the additional signaling; and
if the third inter-node message indicates that only a subset of the plurality of candidate PSCells has been accepted, performing the additional signaling with the source SN to obtain one or more updated CPC execution condition information items, and transmitting to the UE a first MN RRC reconfiguration message including the one or more updated CPC execution condition information items and the one or more PSCell configuration information items.

7. A non-transitory computer readable medium storing a program for causing a computer to perform a method for a Radio Access Network (RAN) node configured to operate as a Master Node (MN) associated with a Master Cell Group (MCG) in dual connectivity for a User Equipment (UE), the method comprising:
receiving from a source Secondary Node (SN) a first inter-node message indicating a request for an SN-initiated inter-SN Conditional PSCell Change (CPC), wherein the first inter-node message includes one or more CPC execution condition information items indicating a plurality of CPC execution conditions each associated with a respective one of a plurality of candidate Primary SCG Cells (PSCells);
sending to a target SN a second inter-node message indicating a request for an inter-SN CPC and including information about the plurality of candidate PSCells;
receiving a third inter-node message from the target SN, wherein the third inter-node message includes one or more PSCell configuration information items each indicating a PSCell configuration of a respective one of one or more accepted candidate PSCells, and the third inter-node message indicates to the MN whether all of the plurality of candidate PSCells have been accepted or not;
if the third inter-node message indicates that all of the plurality of candidate PSCells have been accepted, transmitting to the UE a first MN Radio Resource Control (RRC) reconfiguration message including the one or more CPC execution condition information items and the one or more PSCell configuration information items, while skipping additional signaling with the source SN or without waiting for completion of the additional signaling; and
if the third inter-node message indicates that only a subset of the plurality of candidate PSCells has been accepted, performing the additional signaling with the source SN to obtain one or more updated CPC execution condition information items, and transmitting to the UE a first MN RRC reconfiguration message including the one or more updated CPC execution condition information items and the one or more PSCell configuration information items.

8. A Radio Access Network (RAN) node configured to operate as a target Secondary Node (SN) associated with a Secondary Cell Group (SCG) in dual connectivity for a User Equipment (UE), the RAN node comprising:
at least one memory; and
at least one processor coupled to the at least one memory and configured to:
receive from a Master Node (MN) a second inter-node message indicating a request for an inter-SN Conditional PSCell Change (CPC) and including information about a plurality of candidate Primary SCG Cells (PSCells); and
send a third inter-node message to the MN,
wherein the third inter-node message includes one or more PSCell configuration information items each indicating a PSCell configuration of a respective one of one or more accepted candidate PSCells, and the third inter-node message indicates to the MN whether all of the plurality of candidate PSCells have been accepted or not.

9. A method performed by a Radio Access Network (RAN) node configured to operate as a target Secondary Node (SN) associated with a Secondary Cell Group (SCG) in dual connectivity for a User Equipment (UE), the method comprising:
receiving from a Master Node (MN) a second inter-node message indicating a request for an inter-SN Conditional PSCell Change (CPC) and including information about a plurality of candidate Primary SCG Cells (PSCells); and
sending a third inter-node message to the MN,
wherein the third inter-node message includes one or more PSCell configuration information items each indicating a PSCell configuration of a respective one of one or more accepted candidate PSCells, and the third inter-node message indicates to the MN whether all of the plurality of candidate PSCells have been accepted or not.

10. A non-transitory computer readable medium storing a program for causing a computer to perform a method for a Radio Access Network (RAN) node configured to operate as a target Secondary Node (SN) associated with a Secondary Cell Group (SCG) in dual connectivity for a User Equipment (UE), the method comprising:
receiving from a Master Node (MN) a second inter-node message indicating a request for an inter-SN Conditional PSCell Change (CPC) and including information about a plurality of candidate Primary SCG Cells (PSCells); and
sending a third inter-node message to the MN,
wherein the third inter-node message includes one or more PSCell configuration information items each indicating a PSCell configuration of a respective one of one or more accepted candidate PSCells, and the third inter-node message indicates to the MN whether all of the plurality of candidate PSCells have been accepted or not.

11. A Radio Access Network (RAN) node configured to operate as a Master Node (MN) associated with a Master Cell Group (MCG) in dual connectivity for a User Equipment (UE), the RAN node comprising:
at least one memory; and
at least one processor coupled to the at least one memory and configured to:
receive from a source Secondary Node (SN) a first inter-node message indicating a request for an SN-initiated inter-SN Conditional PSCell Change (CPC), wherein the first inter-node message includes a plurality of cell identification information items each indicating a respective one of a plurality of candidate Primary SCG Cells (PSCells), and also includes a plurality of CPC execution condition information items each associated with a respective one of the plurality of cell identification information items;
send to a target SN a second inter-node message indicating a request for an inter-SN CPC and including information about the plurality of candidate PSCells;
receive from the target SN a third inter-node message including one or more PSCell configuration information items each indicating a PSCell configuration of a respective one of one or more accepted candidate PSCells;
select one or more CPC execution condition information items corresponding to the one or more accepted candidate PSCells from the plurality of CPC execution condition information items; and
transmit to the UE a first MN Radio Resource Control (RRC) reconfiguration message including the one or more selected CPC execution condition information items and the one or more PSCell configuration information items.

12. The RAN node according to claim 11, wherein the at least one processor is configured to:
send to the source SN a fourth inter-node message indicating the one or more accepted candidate PSCells or indicating one or more candidate PSCells rejected by the target SN; and
receive a fifth inter-node message from the source SN after sending the fourth inter-node message, and
wherein the first MN RRC reconfiguration message is sent to the UE before the MN receives the fifth inter-node message.

13. The RAN node according to claim 12, wherein
the fifth inter-node message includes at least one updated CPC execution condition information item for at least one of the one or more accepted candidate PSCells, and
the at least one processor is configured to send to the UE a second MN RRC reconfiguration message including the at least one updated CPC execution condition information item.

14. The RAN node according to any one of claims 11 to 13, wherein
the plurality of cell identification information items are sent by the first inter-node message to the MN in a non-transparent manner, and
each of the plurality of CPC execution condition information items is sent by the first inter-node message using a container that is transparent to the MN.

15. The RAN node according to any one of claims 11 to 14, wherein
the first inter-node message is an SN Change Required message,
the second inter-node message is an SN Addition Request message, and
the third inter-node message is an SN Addition Request Acknowledge message.

16. The RAN node according to claim 12, wherein the fourth inter-node message is an SN Change Confirm message.

17. The RAN node according to claim 16, wherein the fifth inter-node message is an SN Modification Required message.

18. A method performed by a Radio Access Network (RAN) node configured to operate as a Master Node (MN) associated with a Master Cell Group (MCG) in dual connectivity for a User Equipment (UE), the method comprising:
receiving from a source Secondary Node (SN) a first inter-node message indicating a request for an SN-initiated inter-SN Conditional PSCell Change (CPC), wherein the first inter-node message includes a plurality of cell identification information items each indicating a respective one of a plurality of candidate Primary SCG Cells (PSCells), and also includes a plurality of CPC execution condition information items each associated with a respective one of the plurality of cell identification information items;
sending to a target SN a second inter-node message indicating a request for an inter-SN CPC and including information about the plurality of candidate PSCells;
receiving from the target SN a third inter-node message including one or more PSCell configuration information items each indicating a PSCell configuration of a respective one of one or more accepted candidate PSCells;
selecting one or more CPC execution condition information items corresponding to the one or more accepted candidate PSCells from the plurality of CPC execution condition information items; and
transmitting to the UE a first MN Radio Resource Control (RRC) reconfiguration message including the one or more selected CPC execution condition information items and the one or more PSCell configuration information items.

19. A non-transitory computer readable medium storing a program for causing a computer to perform a method for a Radio Access Network (RAN) node configured to operate as a Master Node (MN) associated with a Master Cell Group (MCG) in dual connectivity for a User Equipment (UE), the method comprising:
receiving from a source Secondary Node (SN) a first inter-node message indicating a request for an SN-initiated inter-SN Conditional PSCell Change (CPC), wherein the first inter-node message includes a plurality of cell identification information items each indicating a respective one of a plurality of candidate Primary SCG Cells (PSCells), and also includes a plurality of CPC execution condition information items each associated with a respective one of the plurality of cell identification information items;
sending to a target SN a second inter-node message indicating a request for an inter-SN CPC and including information about the plurality of candidate PSCells;
receiving from the target SN a third inter-node message including one or more PSCell configuration information items each indicating a PSCell configuration of a respective one of one or more accepted candidate PSCells;
selecting one or more CPC execution condition information items corresponding to the one or more accepted candidate PSCells from the plurality of CPC execution condition information items; and
transmitting to the UE a first MN Radio Resource Control (RRC) reconfiguration message including the one or more selected CPC execution condition information items and the one or more PSCell configuration information items.

20. A Radio Access Network (RAN) node configured to operate as a source Secondary Node (SN) associated with a Secondary Cell Group (SCG) in dual connectivity for a User Equipment (UE), the RAN node comprising:
at least one memory; and
at least one processor coupled to the at least one memory and configured to send to a Master Node (MN) a first inter-node message indicating a request for an SN-initiated inter-SN Conditional PSCell Change (CPC),
wherein the first inter-node message includes a plurality of cell identification information items each indicating a respective one of a plurality of candidate Primary SCG Cells (PSCells), and also includes a plurality of CPC execution condition information items each associated with a respective one of the plurality of cell identification information items.

21. The RAN node according to claim 20, wherein the first inter-node message enables the MN to select one or more CPC execution condition information items corresponding to one or more candidate PSCells accepted by the target SN from the plurality of CPC execution condition information items.

22. The RAN node according to claim 20 or 21, wherein
the plurality of cell identification information items are sent by the first inter-node message to the MN in a non-transparent manner, and
each of the plurality of CPC execution condition information items is sent by the first inter-node message using a container that is transparent to the MN.

23. The RAN node according to any one of claims 20 to 22, wherein the first inter-node message is an SN Change Required message.

24. A method performed by a Radio Access Network (RAN) node configured to operate as a source Secondary Node (SN) associated with a Secondary Cell Group (SCG) in dual connectivity for a User Equipment (UE), the method comprising:
sending to a Master Node (MN) a first inter-node message indicating a request for an SN-initiated inter-SN Conditional PSCell Change (CPC),
wherein the first inter-node message includes a plurality of cell identification information items each indicating a respective one of a plurality of candidate Primary SCG Cells (PSCells), and also includes a plurality of CPC execution condition information items each associated with a respective one of the plurality of cell identification information items.

25. A non-transitory computer readable medium storing a program for causing a computer to perform a method for a Radio Access Network (RAN) node configured to operate as a source Secondary Node (SN) associated with a Secondary Cell Group (SCG) in dual connectivity for a User Equipment (UE), the method comprising:
sending to a Master Node (MN) a first inter-node message indicating a request for an SN-initiated inter-SN Conditional PSCell Change (CPC),
wherein the first inter-node message includes a plurality of cell identification information items each indicating a respective one of a plurality of candidate Primary SCG Cells (PSCells), and also includes a plurality of CPC execution condition information items each associated with a respective one of the plurality of cell identification information items.

26. A Radio Access Network (RAN) node configured to operate as a Master Node (MN) associated with a Master Cell Group (MCG) in dual connectivity for a User Equipment (UE), the RAN node comprising:
at least one memory; and
at least one processor coupled to the at least one memory and configured to:
transmit an MN Radio Resource Control (RRC) reconfiguration message to the UE, the MN RRC reconfiguration message including an execution condition for an inter-SN Conditional PSCell Change (CPC) and a configuration of a candidate Primary SCG Cell (PSCell);
receive from the UE a first MN RRC reconfiguration complete message sent in response to the MN RRC reconfiguration message;
receive a second MN RRC reconfiguration complete message sent by the UE in response to execution of the CPC or satisfaction of the execution condition; and
send a Conditional PSCell Change Notification message to a source Secondary Node (SN) in response to receiving the second MN RRC reconfiguration complete message.

27. The RAN node according to claim 26, wherein the Conditional PSCell Change Notification message causes the source SN to stop providing user data to the UE.

28. The RAN node according to claim 26 or 27, wherein the second MN RRC reconfiguration complete message contains an SN RRC reconfiguration complete message, and
the at least one processor is configured to forward the SN RRC reconfiguration complete message to the target SN via an SN Reconfiguration Complete message in response to receiving the second MN RRC reconfiguration complete message.

29. The RAN node according to any one of claims 26 to 28, wherein the at least one processor is configured to send an SN Release Request message or an SN Change Confirm message to the source SN during a procedure that is for preparing the inter-SN CPC and is performed before receiving the second MN RRC reconfiguration completion message.

30. The RAN node according to claim 29, wherein the SN Release Request message or the SN Change Confirm message causes the source SN to continue providing user data to the UE until the CPC is executed.

31. The RAN node according to claim 29 or 30, wherein the SN Release Request message or the SN Change Confirm message includes information indicating that this message is for an inter-SN CPC.

32. A method performed by a Radio Access Network (RAN) node configured to operate as a Master Node (MN) associated with a Master Cell Group (MCG) in dual connectivity for a User Equipment (UE), the method comprising:
transmitting an MN Radio Resource Control (RRC) reconfiguration message to the UE, the MN RRC reconfiguration message including an execution condition for an inter-SN Conditional PSCell Change (CPC) and a configuration of a candidate Primary SCG Cell (PSCell);
receiving from the UE a first MN RRC reconfiguration complete message sent in response to the MN RRC reconfiguration message;
receiving a second MN RRC reconfiguration complete message sent by the UE in response to execution of the CPC or satisfaction of the execution condition; and
sending a Conditional PSCell Change Notification message to a source Secondary Node (SN) in response to receiving the second MN RRC reconfiguration complete message.

33. A non-transitory computer readable medium storing a program for causing a computer to perform a method for a Radio Access Network (RAN) node configured to operate as a Master Node (MN) associated with a Master Cell Group (MCG) in dual connectivity for a User Equipment (UE), the method comprising:
transmitting an MN Radio Resource Control (RRC) reconfiguration message to the UE, the MN RRC reconfiguration message including an execution condition for an inter-SN Conditional PSCell Change (CPC) and a configuration of a candidate Primary SCG Cell (PSCell);
receiving from the UE a first MN RRC reconfiguration complete message sent in response to the MN RRC reconfiguration message;
receiving a second MN RRC reconfiguration complete message sent by the UE in response to execution of the CPC or satisfaction of the execution condition; and
sending a Conditional PSCell Change Notification message to a source Secondary Node (SN) in response to receiving the second MN RRC reconfiguration complete message.
